# EUROPEAN PATENT SPECIFICATION

(11) **EP 1 360 239 B1**
(45) Date of publication and mention of the grant of the patent: **29.07.2009**
(21) Application number: 01993239.1
(22) Date of filing: 11.12.2001
(51) Int. Cl.: C08L 71/12, C08L 25/06, C08L 23/10

(54) **POLY(ARYLENE ETHER)-POLYOLEFIN COMPOSITION AND ARTICLES DERIVED THEREFROM**
POLYARYLENETHER-POLYOLEFINZUSAMMENSETZUNG UND FORMASSEN DARAUS
COMPOSITION DE POLY(ARYLENE ETHER)-POLYOLEFINE ET ARTICLES DERIVES DE CELLE-CI

(30) Priority: 28.12.2000 US 258691 P; 28.12.2000 US 258834 P; 28.12.2000 US 258839 P; 01.11.2001 US 682921; 01.11.2001 US 682919; 01.11.2001 US 682923
(43) Date of publication of application: 12.11.2003
(73) Proprietor: Sabic Innovative Plastics IP B.V., 4612 PX Bergen op Zoom (NL)
(72) Inventor: ADEDEJI, Adeyinka, Albany, NY 12209 (US); LAMB, David, R., Albany, NY 12210 (US); LANNING, Vincent, L., Pittsfield, MA 01201 (US); HARTLE, Thomas, J., Delmar, NY 12054 (US); HAYLOCK, John, C., Reston, VA 20194 (US)
(74) Representative: Bublak, Wolfgang
(86) International application number: PCT/US2001/047700
(87) International publication number: WO 2002/057364

(56) References cited:
- EP-A- 0 835 908
- EP-A- 1 029 876
- WO-A-02/053644
- GB-A- 1 559 262
- US-A- 5 081 187
- US-A- 6 031 049

## Description

### BACKGROUND

Compositions comprising poly(arylene ether)s and polyolefins are known in the art, and compositions further comprising specific impact modifiers and compatibilizing agents have been described.

U.S. Patent No. 4,713,416 to Del Giudice et al. generally describes compositions comprising (a) a polyphenylene ether, (b) a thermoplastic polymer incompatible with the PPE, and (c) a polymeric compatibility-promoting agent comprising one or more blocks of vinylaromatic monomer units compatible with the polyphenylene ether (a) and one or more blocks of monomeric units of the same nature as the thermoplastic polymer (b) or compatible with that polymer.

U.S. Patent No. 4,764,559 to Yamauchi et al. generally describes a composition comprising (a) a polyphenylene ether having a low degree of polymerization, with or without a styrene resin, (b) a polyolefin, and (c) a styrene compound/conjugated diene block copolymer or a hydrogenation product thereof.

U.S. Patent No. 4,863,997 to Shibuya et al. generally describes a composition comprising (a) a polyolefin resin, (b) a polyphenylene ether resin, and (c) a hydrogenated block copolymer of an alkenyl aromatic compound and a conjugated diene that contains 45-80 weight percent of a repeating unit derived from the alkenyl aromatic compound.

U.S. Patent No. 5,071,912 to Furuta et al. generally describes a composition comprising (a) a polyphenylene ether, (b) a styrene-modified propylene polymer or a composition containing a styrene-modified propylene polymer and polypropylene, and (c) at least two rubbery substances, one being compatible with (a) and the other incompatible with (a).

U.S. Patent No. 5,081,187 to Maruyama et al. generally describes a composition comprising specific amounts of (a) a polyolefin, (b) a polyphenylene ether, (c) a partially hydrogenated alkenyl aromatic compound-isoprene block copolymer, and (d) an alkenyl aromatic compound-conjugated diene block copolymer.

U.S. Patent No. 5,418,287 to Tanaka et al. generally describes a composition comprising (a) a polyphenylene ether, (b) a crystalline polyolefin resin, and (c) a graft copolymer where the backbone is a copolymer of (i) ethylene or at least one C₃-C₁₂ alpha-olefin, and (ii) at least one chain nonconjugated diene.

U.S. Patent No. 6,031,049 to Chino et al. generally describes a composition comprising specific amounts of (a) a component composed of syndiotactic polystyrene and a polyolefin, (b) a block or graft styrene-olefin copolymer having a styrene content of 40 to 85% by weight, and (c) a polyphenylene ether.

European Patent Application No. 412,787 A2 to Furuta et al. generally describes compositions comprising (a) a polyphenylene ether, (b) a propylene polymer modified by grafting with a styrene-based monomer alone or in combination with another copolymerizable monomer, with or without an unmodified propylene polymer, and (c) a rubbery substance having chain A miscible with all or part of (a) and chain B miscible with all or part of (b).
EP-A-1029876 discloses a hydrogenated block copolymer having an aromatic vinyl compound monomer content of from 25 to 80 weight percent. The block copolymer may be incorporated into an alloy of a polypropylene resin with a polyphenylene ether resin or a polystyrene resin.

The commercial value of the above described compositions has been limited by deficiencies in the balance of properties such as stiffness, impact strength, and heat resistance, as well as the inconsistency of various properties from batch to batch and from molded sample to molded sample within the same batch. There remains a need for poly(arylene ether)-polyolefin compositions having improved property balances. In particular, there remains a need for poly(arylene ether)-polyolefin compositions exhibiting improved balance between stiffness and impact strength. There also remains a need for poly(arylene ether)-polyolefin compositions exhibiting reduced batch-to-batch and sample-to-sample variability in key properties, including stiffness and impact strength.

### BRIEF SUMMARY

The above-described and other drawbacks and disadvantages of the related art are alleviated by a thermoplastic composition, comprising: a poly(arylene ether); a poly(alkenyl aromatic) resin in an amount of at least 30 weight percent of the total of the poly(arylene ether) and the poly(alkenyl aromatic) resin; a polyolefin; a hydrogenated block copolymer of an alkenyl aromatic compound and a conjugated diene, wherein the hydrogenated block copolymer has an alkenyl aromatic content of 40 to 90 weight percent; and an unhydrogenated block copolymer of an alkenyl aromatic compound and a conjugated diene.

Another embodiment of the invention is a thermoplastic composition comprising: a poly(arylene ether); a poly(alkenyl aromatic) resin; a polyolefin; a hydrogenated block copolymer of alkenyl aromatic compound and a conjugated diene, wherein the hydrogenated block copolymer has an alkenyl aromatic content of 40 to 90 weight percent; an unhydrogenated block copolymer of an alkenyl aromatic compound and a conjugated diene and a polypropylene-polystyrene graft copolymer or an unhydrogenated block copolymer of an alkenyl aromatic compound and a conjugated diene.

Other embodiments, including articles comprising reaction products of the above compositions, are described below.

### DETAINED DESCRIPTION OF THE PREFERRED EMBODIMENTS

A thermoplastic composition having an excellent balance of stiffness and impact strength, as well as reduced property variability comprises: a poly(arylene ether); a poly(alkenyl aromatic) resin in an amount of at least 30 weight percent of the total of the poly(arylene ether) and the poly(alkenyl aromatic) resin; a polyolefin; a hydrogenated block copolymer of an alkenyl aromatic compound and a conjugated diene, wherein the hydrogenated block copolymer has an alkenyl aromatic content of 40 to 90 weight percent; and an unhydrogenated block copolymer of an alkenyl aromatic compound and a conjugated diene.

The present inventors have surprisingly discovered that their compositions provide a substantial reduction in property variability compared to known compositions. The present compositions also provide a beneficial and previously unattainable balance between stiffness and impact strength. Other embodiments, including articles comprising the composition, are described below.

The composition comprises any poly(arylene ether). The term poly(arylene ether) includes polyphenylene ether (PPE) and poly(arylene ether) copolymers; graft copolymers; poly(arylene ether) ether ionomers; and block copolymers of alkenyl aromatic compounds, vinyl aromatic compounds or poly(arylene ether); and combinations comprising at least one of the foregoing. Poly(arylene ether)s are known polymers comprising a plurality of structural units of the formula 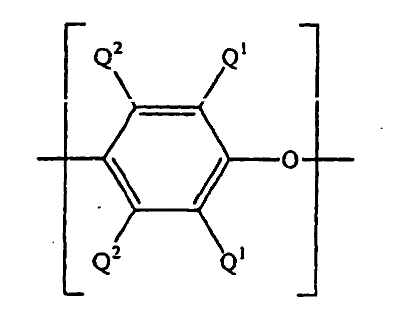 wherein for each structural unit, each Q¹ is independently halogen, primary or secondary C₁-C₈ alkyl, phenyl, C₁-C₈ haloalkyl, C₁-C₈ aminoalkyl, C₁-C₈ hydrocarbonoxy, or C₂-C₈ halohydrocarbonoxy wherein at least two carbon atoms separate the halogen and oxygen atoms: and each O² is indenendently hydrogen, halogen, primary or secondary C₁-C₈ alkyl, phenyl, C₁-C₈ haloalkyl, C₁-C₈ aminoalkyl, C₁-C₈ hydrocarbonoxy, or C₂-C₈ halohydrocarbonoxy wherein at least two carbon atoms separate the halogen and oxygen atoms. Preferably, each Q¹ is alkyl or phenyl, especially C₁₋₄ alkyl, and each Q² is independently hydrogen or methyl.

Both homopolymer and copolymer poly(arylene ether)s are included. The preferred homopolymers are those comprising 2,6-dimethylphenylene ether units. Suitable copolymers include random copolymers comprising, for example, such units in combination with 2,3,6-trimethyl-1,4-phenylene ether units or copolymers derived from copolymerization of 2,6-dimethylphenol with 2,3,6-trimethylphenol. Also included are poly(arylene ether)s containing moieties prepared by grafting vinyl monomers or polymers such as polystyrenes, as well as coupled poly(arylene ether) in which coupling agents such as low molecular weight polycarbonates, quinones, heterocycles and formals undergo reaction in known manner with the hydroxy groups of two poly(arylene ether) chains to produce a higher molecular weight polymer. Poly(arylene ether)s of the present invention further include combinations of any of the above.

The poly(arylene ether) generally has a number average molecular weight of 3,000 to 40,000 atomic mass units (AMU) and a weight average molecular weight of 20,000 to 80,000 AMU, as determined by gel permeation chromatography. The poly(arylene ether) generally may have an intrinsic viscosity of 0.2 to 0.6 deciliters per gram (dL/g) as measured in chloroform at 25°C. Within this range, the intrinsic viscosity may preferably be up to 0.5 dL/g, more preferably up to 0.47 dL/g. Also within this range, the intrinsic viscosity may preferably be at least 0.3 dL/g. It is also possible to utilize a high intrinsic viscosity poly(arylene ether) and a low intrinsic viscosity poly(arylene ether) in combination. Determining an exact ratio, when two intrinsic viscosities are used, will depend on the exact intrinsic viscosities of the poly(arylene ether)s used and the ultimate physical properties desired.

The poly(arylene ether)s are typically prepared by the oxidative coupling of at least one monohydroxyaromatic compound such as 2,6-xylenol or 2,3,6-trimethylphenol. Catalyst systems are generally employed for such coupling; they typically contain at least one heavy metal compound such as a copper, manganese or cobalt compound, usually in combination with various other materials.

Particularly useful poly(arylene ether)s for many purposes include those that comprise molecules having at least one aminoalkyl-containing end group. The aminoalkyl radical is typically located in an ortho position relative to the hydroxy group. Products containing such end groups may be obtained by incorporating an appropriate primary or secondary monoamine such as di-n-butylamine or dimethylamine as one of the constituents of the oxidative coupling reaction mixture. Also frequently present are 4-hydroxybiphenyl end groups, typically obtained from reaction mixtures in which a by-product diphenoquinone is present, especially in a copper-halide-secondary or tertiary amine system. A substantial proportion of the polymer molecules, typically constituting as much as about 90% by weight of the polymer, may contain at least one of the aminoalkyl-containing and 4-hydroxybiphenyl end groups.

The composition may comprise poly(arylene ether) in an amount of 10 to 59 weight percent, based on the total weight of the composition. Within this range, it may be preferred to use a poly(arylene ether) amount of at least 16 weight percent, more preferably at least 18 weight percent. Also within this range, it may be preferred to use a poly(arylene ether) amount of up to 50 weight percent, more preferably up to 40 weight percent.

The composition further comprises a poly(alkenyl aromatic) resin. The term "poly(alkenyl aromatic) resin" as used herein includes polymers prepared by methods known in the art including bulk, suspension, and emulsion polymerization, which contain at least 25% by weight of structural units derived from an alkenyl aromatic monomer of the formula 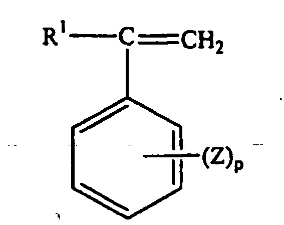 wherein R¹ is hydrogen, C₁-C₈ alkyl, or halogen; Z is vinyl, halogen or C₁-C₈ alkyl; and p is 0 to 5. Preferred alkenyl aromatic monomers include styrene, chlorostyrenes such as p-chlorostyrene, and methylstyrenes such as p-methylstyrene. The poly(alkenyl aromatic) resins include homopolymers of an alkenyl aromatic monomer; random copolymers of an alkenyl aromatic monomer, such as styrene, with one or more different monomers such as acrylonitrile, butadiene, alpha-methylstyrene, ethylvinylbenzene, divinylbenzene and maleic anhydride; and rubber-modified poly(alkenyl aromatic) resins comprising blends and/or grafts of a rubber modifier and a homopolymer of an alkenyl aromatic monomer (as described above), wherein the rubber modifier may be a polymerization product of at least one C₄-C₁₀ nonaromatic diene monomer, such as butadiene or isoprene. The rubber-modified poly(alkenyl aromatic) resin may comprise 98 to 70 weight percent of the homopolymer of an alkenyl aromatic monomer and 2 to 30 weight percent of the rubber modifier. Within these ranges it may be preferred to use at least 88 weight percent of the alkenyl aromatic monomer. It may also be preferred to use up to 94 weight percent of the alkenyl aromatic monomer. It may also be preferred to use at least 6 weight percent of the rubber modifier. It may also be preferred to use up to 12 weight percent of the rubber modifier.

The stereoregularity of the poly(alkenyl aromatic) resin may be atactic or syndiotactic. Highly preferred poly(alkenyl aromatic) resins include atactic and syndiotactic homopolystyrenes. Suitable atactic homopolystyrenes are commercially available as, for example, EB3300 from Chevron, and P1800 from BASF. Suitable syndiotactic homopolystyrenes are commercially available, for example, under the tradename QLTESTRA® (e.g., QUESTRA® WA550) from Dow Chemical Company. Highly preferred poly(alkenyl aromatic) resins further include the rubber-modified polystyrenes, also known as high-impact polystyrenes or HIPS, comprising 88 to 94 weight percent polystyrene and 6 to 12 weight percent polybutadiene, with an effective gel content of 10% to 35%. These rubber-modified polystyrenes are commercially available as, for example, GEH 1897 from General Electric Plastics, and BA 5350 from Chevron.

The composition may comprise the poly(alkenyl aromatic) resin in an amount of 4 to 46 weight percent, with the proviso that the poly(alkenyl aromatic resin constitutes at least 30 weight percent, of the total of the poly(arylene ether) and the poly(alkenyl aromatic) resin. Within this range, it may be preferable to use the poly(alkenyl aromatic) resin in an amount of at least about preferably about 6 weight percent, based on the total weight of the composition. Also within this range, it may be preferred to use the poly(alkenyl aromatic) resin in an amount up to 20 weight percent, based on the total weight of the composition.

The amount of poly(alkenyl aromatic) resin is expressed as a fraction of the total of poly(arylene ether) and poly(alkenyl aromatic) resin. The composition comprises poly(alkenyl aromatic) resin in an amount of 30 to 80 weight percent, based on the combined weight of poly(arylene ether) and poly(alkenyl aromatic) resin. Within this range, it may be preferred to use a poly(alkenyl aromatic) resin amount up to 70 weight percent, more preferably up to 65 weight percent. Also within this range, it may be preferred to use a poly(alkenyl aromatic) resin amount of at least 35 weight percent, morse preferably at least 40 weight percent. When the amount of poly(alkenyl aromatic) resin is less than 30 weight percent of the total of the poly(arylene ether) and poly(alkenyl aromatic) resin, the composition after molding may be deficient in flexural modulus. When the amount of poly(alkenyl aromatic) resin is greater than 80 weight percent of the total of the poly(arylene ether) and poly(alkenyl aromatic) resin, the composition after molding may be deficient in heat distortion temperature. The proportions of poly(alkenyl aromatic) resin and poly(arylene ether) may be manipulated to control the glass transition temperature (T_{g}) of the single phase comprising these two components relative to the T_{g} of the poly(arylene ether) alone, or relative to the melting temperature (Tₘ) of the polyolefin alone. For example, the relative amounts of poly(alkenyl aromatic) resin and poly(arylene ether) may be chosen so that the poly(arylene ether) and the poly(alkenyl aromatic) resin form a single phase having a glass transition temperature at least 20°C greater, preferably at least 30°C greater, than the glass transition temperature of the poly(alkenyl aromatic) resin alone, which may be, for example, 100°C to 110°C. Also, the relative amounts of poly(alkenyl aromatic) resin and poly(arylene ether) may be chosen so that the poly(arylene ether) and the poly(alkenyl aromatic) resin form a single phase having a glass transition temperature up to 15°C greater, preferably up to 10°C greater, more preferably up to 1°C greater, than the Tₘ of the polyolefin alone. The relative amounts of poly(alkenyl aromatic) resin and poly(arylene ether) may be chosen so that the poly(arylene ether) and the poly(alkenyl aromatic) resin form a single phase having a glass transition temperature of 130°C to 180°C.

The composition further comprises a polyolefin. The polyolefin may be a homopolymer or copolymer having at least 80 weight percent of units derived from polymerization of ethylene, propylene, butylene, or a mixture thereof. Examples of polyolefin homopolymers include polyethylene, polypropylene, and polybutylene. Examples of polyolefin copolymers include random, graft, and block copolymers of ethylene, propylene, and butylene with each other, and further comprising up to 20 weight percent of units derived from C₅-C₁₀ alpha olefins (excluding aromatic alpha-olefins). Polyolefins further include blends of the above homopolymers and copolymers. Preferred polyolefins mav have a flexural modulus of at least 689,476 kilo Pascal (kPa) at 23°C as measured according to ASTM D790. Suitable polyolefins may comprise, for example, the linear low density polyethylene available from ExxonMobil as LL-6201, the low density polyethylene available from ExxonMobil as LMA-027, the high density polyethylene available from ExxonMobil as HD-6605, the ultra-high molecular weight polyethylene available as Type 1900 from Montell Polyolefins, and the polybutylene (polybutene-1) available as PB0110 from Montell Polyolefins.

Presently preferred polyolefins include propylene polymers. The propylene polymer may be a homopolymer of polypropylene. Alternatively, the propylene polymer may be a random, graft, or block copolymer of propylene and at least one olefin selected from ethylene and C₄-C₁₀ alpha-olefins (excluding.aromatic alpha-olefins), with the proviso that the copolymer comprises at least 80 weight percent, preferably at least 90 weight percent, of repeating units derived from propylene. Blends of such propylene polymers with a minor amount of another polymer such as polyethylene are also included within the scope of propylene polymers. The propylene polymer may have a melt flow index of 0.1 to 50 g/10 min, preferably 1 to 30 g/10 min when measured according to ASTM D1238 at 2.16 kg and 200°C. The above-described propylene polymers can be produced by various known processes. Commercially available propylene polymers may also be employed.

Preferred propylene polymers include homopolypropylenes. Highly preferred propylene polymers include homopolypropylenes having a crystalline content of at least 20%, preferably at least 30%. Suitable isotactic polypropylenes are commercially available as, for example, PD403 pellets from Basell (formerly Montell Polyolefins of North America).

The composition may comprise polyolefin in an amount of 10 to 70 weight percent, preferably 10 to 60 weight percent, more preferably 10 to 50 weight percent, based on the total weight of the composition.

The composition comprises a hydrogenated block copolymer of an alkenyl aromatic compound and a conjugated diene having an alkenyl aromatic content of 40 to 90 weight percent (hereinafter referred to as the "hydrogenated block copolymer"). The hydrogenated block copolymer is a copolymer comprising (A) at least one block derived from an alkenyl aromatic compound and (B) at least one block derived from a conjugated diene, in which the aliphatic unsaturated group content in the block (B) is reduced by hydrogenation. The arrangement of blocks (A) and (B) includes a linear structure, a grafted structure, and a radial teleblock structure with or without a branched chain.

Preferred among these structures are linear structures embracing diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of A and B. More preferred are diblock, triblock, and tetrablock structures, with the A-B-A triblock structure being particularly preferred.

The alkenyl aromatic compound providing the block (A) is represented by formula 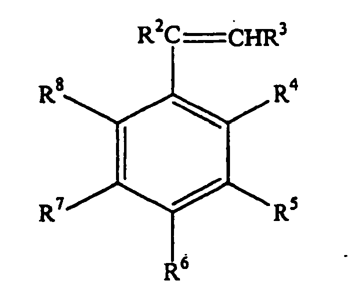 wherein R² and R³ each independently represent a hydrogen atom, a C₁-C₈ alkyl group or a C₂-C₈ alkenyl group; R⁴ and R⁸ each independently represent a hydrogen atom, a C₁-C₈ alkyl group, a chlorine atom or a bromine atom; and R⁵-R⁷ each independently represent a hydrogen atom, a C₁-C₈ alkyl group or a C₂-C₈ alkenyl group, or R⁴ and R⁵ are taken together with the central aromatic ring to form a naphthyl group, or R⁵ and R⁶ are taken together with the central aromatic ring to form a naphthyl group.

Specific examples, of the alkenyl aromatic compounds include styrene, p-methylstyrene, alpha-methylstyrene, vinylxylenes, vinyltoluenes, vinylnaphthalenes, divinylbenzenes, bromostyrenes, and chlorostyrenes, and combinations comprising at least one of the foregoing alkenyl aromatic compounds. Of these, styrene, alpha-methylstyrene, p-methylstyrene, vinyltoluenes, and vinylxylenes are preferred, with styrene being more preferred.

Specific examples of the conjugated diene include 1,3-butadiene, 2-methyl-1,3-butadiene, 2,3-dimethyl-1,3-butadiene, and 1,3-pentadiene, Preferred among them are 1,3-butadiene and 2-methyl-1,3-butadiene, with 1,3-butadiene being more preferred.

In addition to the conjugated diene, the hydrogenated block copolymer may contain a small proportion of a lower olefinic hydrocarbon such as, for example, ethylene, propylene, 1-butene, dicyclopentadiene or a non-conjugated diene.

The content of the repeating unit derived from the alkenyl aromatic compound in the hydrogenated block copolymer may be 40 to 90 weight percent, based on the total weight of the hydrogenated block copolymer. Within this range, the alkenyl aromatic compound content may preferably be at least 50 weight percent, more preferably at least 55 weight percent. Also within this range, the alkenyl aromatic compound content may preferably be up to 85 weight percent, more preferably up to 75 weight percent.

There is no particular limitation on the mode of incorporation of the conjugated diene in the hydrogenated block copolymer backbone. For example, when the conjugated diene is 1,3-butadiene, it may be incorporated with 1% to 99% 1,2-incorporation, with the remainder being 1,4-incorporation.

The hydrogenated block copolymer is preferably hydrogenated to such a degree that fewer than 50%, more preferably fewer than 20%, yet more preferably fewer than 10%, of the unsaturated bonds in the aliphatic chain moiety derived from the conjugated diene remain unreduced. The aromatic unsaturated bonds derived from the alkenyl aromatic compound may be hydrogenated to a degree of up to 25%.

The hydrogenated block copolymer preferably has a number average molecular weight of 5,000 to 500,000 AMU, as determined by gel permeation chromatography (GPC) using polystyrene standards. Within this range, the number average molecular weight may preferably be at least 10,000 AMU, more preferably at least 30,000 AMU, yet more preferably at least 45,000 AMU. Also within this range, the number average molecular weight may preferably be up to 300,000 AMU, more preferably up to 200,000 AMU, yet more preferably up to 150,000 AMU.

The molecular weight distribution of the hydrogenated block copolymer as measured by GPC is not particularly limited. The copolymer may have any ratio of weight average molecular weight to number average molecular weight.

Some of these hydrogenated block copolymers have a hydrogenated conjugated diene polymer chain to which crystallinity is ascribed. Crystallinity of the hydrogenated block copolymer can be determined by the use of a differential scanning calorimeter (DSC), for example, DSC-II Model manufactured by Perkin-Elmer Co. Heat of fusion can be measured by a heating rate of, for example, 10°C/min in an inert gas atmosphere such as nitrogen. For example, a sample may be heated to a temperature above an estimated melting point, cooled by decreasing the temperature at a rate of 10°C/min, allowed to stand for about 1 minute, and then heated again at a rate of 10°C/min.

The hydrogenated block copolymer may have any degree of crystallinity. In view of a balance of mechanical strength of the resulting resin composition, those hydrogenated block copolymers having a melting point of -40°C to 160°C or having no definite melting point (i.e., having non-crystallinity), as measured according to the above-described technique, are preferred. Within the melting point range of -40°C to 160°C, it may be preferred to use a hydrogenated block copolymer having a melting point of at least -20°C, more preferably at least 0°C, yet more preferably at least 20°C, still more preferably at least 40°C. Also within this range, it may be preferred to use a hydrogenated block copolymer having a melting point of up to 140°C, more preferably up to 110°C, yet more preferably up to 100°C.

The hydrogenated block copolymer may have any glass transition temperature (T_{g}) ascribed to the hydrogenated conjugated diene polymer chain. From the standpoint of low-temperature impact strength of the resulting resin composition, it preferably has a T_{g} of up to -60°C, more preferably up to -120°C. The glass transition temperature of the copolymer can be measured by the aforesaid DSC method or from the visco-elastic behavior toward temperature change as observed with a mechanical spectrometer.

Particularly preferred hydrogenated block copolymers are the styrene-(ethylene-butylene) diblock and styrene-(ethylene-butylene)-styrene triblock copolymers obtained by hydrogenation of styrene-butadiene and styrene-butadiene-styrene triblock copolymers, respectively.The hydrogenated block copolymer may be synthesized by block polymerization followed by hydrogenation as described, for example, in U.S. Patent No. 4,863,997 to Shibuya et al. Suitable hydrogenated block copolymers include the styrene-(ethylene-butylene) diblock and styrene-(ethylene-butylene)-styrene triblock copolymers commercially available as, for example, TUFTEC® H1043 sold by Asahi Chemical.

The composition may comprise the hydrogenated block copolymer in an amount of 1 to 20 weight percent, preferably 1 to 15 weight percent, more preferably 1 to 12 weight percent, based on the total weight of the composition.

The composition further comprises an unhydrogenated block copolymer of alkenyl aromatic compound and a conjugated diene (referred to hereinafter as an "unhydrogenated block copolymer"). The unhydrogenated block copolymer is a copolymer comprising (A) at least one block derived from an alkenyl aromatic compound and (B) at least one block derived from a conjugated diene, in which the aliphatic unsaturated group content in the block (B) has not been reduced by hydrogenation. The alkenyl aromatic compound (A) and the conjugated diene (B) are defined in detail above in the description of the hydrogenated block copolymer. The arrangement of blocks (A) and (B) includes a linear structure and a so-called radial teleblock structure having a branched chain.

Preferred of these structures are linear structures embracing diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of A and B. More preferred are diblock, triblock, and tetrablock structures, with the A-B-A triblock structure being particularly preferred.

The unhydrogenated block copolymer may comprise 10 to 90 weight percent of the (A) blocks. Within this range, it may be preferred to use at least 20 weight percent (A) blocks. Also within this range, it may be preferred to use up to 80 weight percent (A) blocks.

Particularly preferred unhydrogenated block copolymers included styrene-butadiene-styrene triblock copolymers.

Suitable unhydrogenated block copolymers may be prepared by known methods or obtained commercially as, for example, KRATON® D series polymers, including KRATON® D1101 and D1102, from Kraton Polymers (formerly a division of Shell Chemical). Suitable unhydrogenated block copolymers further include the styrene-butadiene radial teleblock copolymers available as, for example, K-RESIN® KR01, KR03, KR05, and KR10 sold by Chevron Phillips Chemical Company.

The unhydrogenated block copolymers may be used at 1 to 20 weight percent, preferably 1 to 15 weight percent, more preferably 1 to 10 weight percent, of the total weight of the composition.

The composition may, optionally, further comprise a polypropylene-polystyrene graft copolymer. The polypropylene-polystyrene graft copolymer is herein defined as a graft copolymer having a propylene polymer backbone and one or more styrene polymer grafts.

The propylene polymer material that forms the backbone or substrate of the polypropylene-polystyrene graft copolymer is (a) a homopolymer of propylene; (b) a random copolymer of propylene and an olefin selected from the group consisting of ethylene and C₄-C₁₀ olefins, provided that, when the olefin is ethylene, the polymerized ethylene content is up to 10 weight percent, preferably up to 4 weight percent, and when the olefin is a C₄-C₁₀ olefin, the polymerized content of the C₄-C₁₀ olefin is up to 20 weight percent, preferably up to 16 weight percent; (c) a random terpolymer of propylene and at least two olefins selected from the group consisting of ethylene and C₄-C₁₀ alpha-olefins, provided that the polymerized C₄-C₁₀ alpha-olefin content is up to 20 weight percent, preferably up to 16 weight percent, and, when ethylene is one of the olefins, the polymerized ethylene content is up to 5 weight percent, preferably up to 4 weight percent; or (d) a homopolymer or random copolymer of propylene which is impact-modified with an ethylene-propylene monomer rubber in the reactor as well as by physical blending, the ethylene-propylene monomer rubber content of the modified polymer being 5 to 30 weight percent, and the ethylene content of the rubber being 7 to 70 weight percent, and preferably 10 to 40 weight percent. The C₄-C₁₀ olefins include the linear and branched C₄-C₁₀ alpha-olefins such as, for example, 1-butene, 1-pentene, 3-methyl-1-butene, 4-methyl-1-pentene, 1-hexene, 3,4-dimethyl-1-butene, 1-heptene, 1-octene, and 3-methyl-hexene. Propylene homopolymers and impact-modified propylene homopolymers are preferred propylene polymer materials. Although not preferred, propylene homopolymers and random copolymers impact modified with an ethylene-propylene-diene monomer rubber having a diene content of 2 to 8 weight percent also can be used as the propylene polymer material. Suitable dienes include dicyclopentadiene, 1,6-hexadiene and ethylidene norbornene.

The term "styrene polymer", used in reference to the grafted polymer present on the backbone of propylene polymer material in the polypropylene-polystyrene graft copolymer, denotes (a) homopolymers of styrene or of an alkyl styrene having at least one C₁-C₄ linear or branched alkyl ring substituent, especially a p-alkyl styrene; (b) copolymers of the (a) monomers with one another in all proportions; and (c) copolymers of at least one (a) monomer with alpha-methyl derivatives thereof, e.g., alpha-methylstyrene, wherein the alpha-methyl derivative constitutes 1 to 40% of the weight of the copolymer.

The polypropylene-polystyrene graft copolymer will typically comprise 10 to 90 weight percent of the propylene polymer backbone and 90 to 10 weight percent of the styrene polymer graft. Within these ranges, the propylene polymer backbone may preferably account for at least 20 weight percent, of the total graft copolymer; and the propylene polymer backbone may preferably account for up to 40 weight percent of the total graft copolymer. Also within these ranges, the styrene polymer graft may preferably account for at least 50 weight percent, more preferably at least 60 weight percent, of the total graft copolymer.

The preparation of polypropylene-polystyrene graft copolymers is described, for example, in U.S. Patent No. 4,990,558 to DeNicola, Jr. et al. Suitable polypropylene-polystyrene graft copolymers are also commercially available as, for example, P1045H1 and P1085H1 from Basell.

When present, the polypropylene-polystyrene graft copolymer may be used in an amount of 0.5 to 15 weight percent, preferably 0.5 to 10 weight percent, more preferably 0.5 to 8 weight percent, based on the total weight of the composition.

The composition may, optionally, further comprise an ethylene/alpha-olefin elastomeric copolymer. The alpha-olefin component of the copolymer may be at least one C₃-C₁₀ alpha-olefn. Preferred alpha-olefins include propylene, 1-butene, and 1-octene. The elastomeric copolymer may be a random copolymer having 25 to 75 weight percent ethylene and 75 to 25 weight percent alpha-olefin. Within these ranges, it may be preferred to use at least 40 weight percent ethylene; and it may be preferred to use up to 60 weight percent ethylene. Also within these ranges, it may be preferred to use at least 40 weight percent alpha-olefin; and it may be preferred to use up to 60 weight percent alpha-olefin. The ethylene/alpha-olefin elastomeric copolymer may typically have a melt flow index of 0.1 to 20 g/10 min at 2.16 kg and 200°C, and a density of 0.8 to 0.9 g/ml.

Particularly preferred ethylene/alpha-olefin elastomeric copolymer rubbers include ethylene-propylene rubbers, ethylene-butene rubbers, ethylene-octene rubbers, and mixtures thereof.

The ethylene/alpha-olefin elastomeric copolymer may be prepared according to known methods or obtained commercially as, for example, the neat ethylene-propylene rubber sold as VISTALON® 878 by ExxonMobil Chemical and the ethylene-butylene rubber sold as EXACT® 4033 by ExxonMobil Chemical. Ethylene/alpha-olefin elastomeric copolymers may also be obtained commercially as blends in polyolefins such as, for example, the ethylene-propylene rubber pre-dispersed in polypropylene sold as product numbers Profax 7624 and Profax 8023 from Basell, and the ethylene-butene rubber pre-dispersed in polypropylene sold as Catalloy K021P from Basell.

When present, the ethylene/alpha-olefin elastomeric copolymer may be used in an amount of 1 to 20 weight percent, based on the total weight of the composition. Within this range, it may be preferred to use an ethylene/alpha-olefin copolymer amount of at least 3 weight percent. Also within this range, it may be preferred to use an ethylene/alpha-olefin copolymer amount of up to 15 weight percent.

In one embodiment, the amount of ethylene/alpha-olefin elastomeric copolymer may be expressed as a fraction of the total of polyolefin and ethylene/alpha-olefin elastomeric copolymer. Thus, when the ethylene/alpha-olefin elastomeric copolymer is present, its amount may be expressed as 1 to 60 weight percent, based on the combined weight of polyolefin and ethylene/alpha-olefin elastomeric copolymer Within this range, it may be preferred to use at least 10 weight percent of the ethylene/alpha-olefin copolymer. Also within this range, it may be preferred to use up to 40 weight percent of the ethylene/alpha-olefin copolymer.

The composition may, optionally, further comprise a hydrogenated block copolymer of an alkenyl aromatic compound and a conjugated diene, wherein the hydrogenated block copolymer has an alkenyl aromatic content of 10 to less than 40 weight percent. For this component, the alkenyl aromatic compound and the conjugated diene compound are the same as those defined above for the hydrogenated block copolymer having an alkenyl aromatic content of 40 to 90 weight percent. Such materials are commercially available as, for example, KRATON® G1650 and G1652 from Kraton Polymers. When present, the hydrogenated block copolymer having an alkenyl aromatic content of 10 to less than 40 weight percent may be used at 1 weight percent to 20 weight percent, based on the total weight of the composition.

In addition to the components described above, the composition may comprise one or more additives known in the art. Such additives may include, for example, stabilizers, mold release agents, processing aids, flame retardants, drip retardants, nucleating agents, UV blockers, dyes, pigments, particulate fillers (i.e., fillers having an aspect ratio less than about 3), reinforcing fillers, conductive fillers (e.g., conductive carbon black, and vapor grown carbon fibers having an average diameter of about 3 to about 500 nanometers), antioxidants, anti-static agents and blowing agents. Such additives are well known in the art and appropriate amounts may be readily determined.

In a preferred embodiment, the composition is substantially free of reinforcing fillers (i.e., the composition comprises less than 0.5 weight percent of reinforcing fillers, preferably less than 0.1 weight percent of reinforcing fillers, more preferably no intentionally added reinforcing fillers). For the purposes of this embodiment, a reinforcing filler is any material that is not soluble in either the poly(arylene ether)-containing phase or the polyolefin-containing phase, and which increases the flexural modulus of the composition.

In a preferred embodiment, the composition comprises: a poly(arylene ether); a poly(alkenyl aromatic) resin; a polyolefin; a hydrogenated block copolymer of an alkenyl aromatic compound and a conjugated diene, wherein the hydrogenated block copolymer has an alkenyl aromatic content of 40 to 90 weight percent; and an unhydrogenated block copolymer of an alkenyl aromatic compound and a conjugated diene; wherein the poly(arylene ether) and the poly(alkenyl aromatic) resin form a single phase having a glass transition temperature at least 20°C greater than the glass transition temperature of the poly(alkenyl aromatic) resin alone.

In another preferred embodiment, the composition comprises: a poly(arylene ether); a poly(alkenyl aromatic) resin; a polyolefin; a hydrogenated block copolymer of an alkenyl aromatic compound and a conjugated diene, wherein the hydrogenated block copolymer has an alkenyl aromatic content of 40 to 90 weight percent; and an unhydrogenated block copolymer of an alkenyl aromatic compound and a conjugated diene; wherein the poly(arylene ether) and the poly(alkenyl aromatic) resin form a single phase having a glass transition temperature no more than 15°C greater than the melting temperature of the polyolefin alone.

In another preferred embodiment, the composition comprises: a poly(arylene ether); a poly(alkenyl aromatic) resin; a polyolefn; a hydrogenated block copolymer of an alkenyl aromatic compound and a conjugated diene, wherein the hydrogenated block copolymer has an alkenyl aromatic content of 40 to 90 weight percent; and an unhydrogenated block copolymer of an alkenyl aromatic compound and a conjugated diene; wherein the poly(arylene ether) and the poly(alkenyl aromatic) resin form a single phase having a glass transition temperature of 130°C to 180°C.

In another preferred embodiment, the composition comprises: a poly(arylene ether); a poly(alkenyl aromatic) resin; a polyolefin; a hydrogenated block copolymer of an alkenyl aromatic compound and a conjugated diene, wherein the hydrogenated block copolymer has an alkenyl aromatic content of 40 to 90 weight percent; and an unhydrogenated block copolymer of an alkenyl aromatic compound and a conjugated diene; and a polypropylene-polystyrene graft copolymer.

In another preferred embodiment, the composition comprises: 10 to 59 weight percent of a poly(arylene ether); 3 to 46 weight percent of a poly(alkenyl aromatic) resin, with the proviso that the poly(alkenyl aromatic) resin accounts for at least 30 weight percent of the total of the poly(arylene ether) and the poly(alkenyl aromatic) resin; 10 to 40 weight percent of a polyolefin; 1 to 20 weight percent of a hydrogenated block copolymer of alkenyl aromatic compound and a conjugated diene, wherein the hydrogenated block copolymer has an alkenyl aromatic content of 40 to 90 weight percent; and 1 to 20 weight percent of an unhydrogenated block copolymer of an alkenyl aromatic compound and a conjugated diene; wherein all weight percents are based on the total weight of the composition.

In another preferred embodiment, the composition comprises: 10 to 59 weight percent of a poly(arylene ether); 1 to 46 weight percent of a poly(alkenyl aromatic) resin; 10 to 40 weight percent of a polyolefin; 1 to 20 weight percent of a hydrogenated block copolymer of alkenyl aromatic compound and a conjugated diene, wherein the hydrogenated block copolymer has an alkenyl aromatic content of 40 to 90 weight percent; and 1 to 20 weight percent of an unhydrogenated block copolymer of an alkenyl aromatic compound and a conjugated diene; and 0.5 to 10 weight percent of a polypropylene-polystyrene graft copolymer; wherein all weight percents are based on the total weight of the composition.

In another preferred embodiment, the composition comprises: 10 to 59 weight percent of a poly(arylene ether); 1 to 46 weight percent of a poly(alkenyl aromatic) resin; 1 to 20 weight percent of an unhydrogenated block copolymer of alkenyl aromatic compound and a conjugated diene; 10 to 40 weight percent of a polyolefin; 1 to 20 weight percent of an ethylene/alpha-olefin elastomeric copolymer; 1 to 20 weight percent of a hydrogenated block copolymer of alkenyl aromatic compound and a conjugated diene, wherein the hydrogenated block copolymer has an alkenyl aromatic content of 40 to 90 weight percent; and 0.5 to 10 weight percent of a polypropylene-polystyrene graft copolymer; wherein all weight percents are based on the total weight of the composition.

In another preferred embodiment, the composition comprises: 16 to 40 weight percent of a poly(arylene ether); 18 to 40 weight percent of a polyolefin; 5 to 20 weight percent of a rubber-modified poly(alkenyl aromatic) resin, wherein the weight ratio of the rubber-modified poly(alkenyl aromatic) resin to the poly(arylene ether) is at least 3:7; 2 to 20 weight percent of a hydrogenated block copolymer of alkenyl aromatic compound and a conjugated diene having an alkenyl aromatic content of 40 to 90 weight percent; 3 to 20 weight percent of an unhydrogenated block copolymer of alkenyl aromatic compound and a conjugated diene; and 2 to 20 weight percent of an ethylene/alpha-olefin elastomeric copolymer; wherein all weight percents are based on the total weight of the composition.

In another preferred embodiment, the composition comprises: 15 to 35 weight percent of a poly(arylene ether); 15 to 46 weight percent of a homopolymer of an alkenyl aromatic monomer; 10 to 35 weight percent of a polyolefin; and 1 to 15 weight percent of a hydrogenated block copolymer of alkenyl aromatic compound and a conjugated diene having an alkenyl aromatic content of 40 to 90 weight percent; wherein the composition is substantially free of rubber-modified poly(alkenyl aromatic) resin; and wherein all weight percents are based on the total weight of the composition. In this embodiment, "substantially free of rubber-modified poly(alkenyl aromatic) resin" is defined as containing less than 0.5 weight percent of rubber-modified poly(alkenyl aromatic) resin. Preferably the composition contains less than 0.1 weight percent of rubber-modified poly(alkenyl aromatic) resin. Even more preferably, the composition contains no intentionally added rubber-modified poly(alkenyl aromatic) resin.

As the composition is defined as comprising multiple components, it will be understood that each component is chemically distinct, particularly in the instance that a single chemical compound may satisfy the definition of more than one component.

The preparation of the compositions of the present invention is normally achieved by merely blending the ingredients under conditions for the formation of an intimate blend. Such conditions often include mixing in single or twin screw type extruders or similar mixing devices that can apply a shear to the components.

Preferred blending methods are described in detail in U.S. Patent Application Serial No. 09/682,929 filed November 1, 2001. In a preferred embodiment, the components are blended in an extruder having at least two addition ports, with at least 50%, preferably at least 75%, more preferably all of the poly(arylene ether) added upstream, and at least 50%, preferably at least 75%, yet more preferably 100%, of the polyolefin added downstream. In another preferred embodiment, the components are blended using at least two mixing stages, comprising upstream mixing and downstream mixing, wherein the upstream mixing is high-energy mixing characterized by at least two mixing elements and/or a mixing section not less than 25.4 mm in length. Downstream mixing may be either high-energy mixing as described above or low-energy mixing, depending on the composition and desired properties of the composition.

The composition is suitable for the formation of articles or components of articles using a variety of molding techniques such as, for example, injection molding, blow molding, extrusion, sheet extrusion, film extrusion, profile extrusion, pultrusion, compression molding, thermoforming, pressure forming, hydroforming, vacuum forming and, foam molding. The composition provides exceptional melt strength, making it especially suitable for the blow molding, thermoforming and extrusion processes.

The composition is useful for use in a variety of articles requiring high stiffness, high impact strength, and high heat distortion temperatures. The compositions are, for example, highly suitable for automotive components, including automotive fascia (including automotive bumper fascia) and under hood components. The compositions are also highly suitable for molded articles for use with prepared foods, including molded trays for microwaveable frozen foods.

The composition exhibits improved property balances. In particular, the composition exhibits an improved balance between stiffness and impact strength. For example the composition may exhibit a flexural modulus at 23°C, measured according to ASTM D790, of 689.5 to at least 2396.7 kPa, and a Dynatup Total Energy at 23°C measured according to ASTM D3763, of 0.675 to at least 47.25 Newton meter (µm). Furthermore, at a given impact strength, the composition may provide high stiffness, and at a given stiffness, the composition may provide high impact strength.

In a preferred embodiment, the composition after molding has a flexural modulus measured at 23°C according to ASTM D790 of at least 1,034,212 kPa and an Izod Notched Impact strength measured at 23°C according to ASTM D256 of at least 214 J/m.

In another preferred embodiment, the composition after molding has a flexural modulus measured at 23°C according to ASTM D790 of at least 1,378,952 kPa and an lzod Notched Impact strength measured at 23°C according to ASTM D256 of at least 374 J/m.

In another preferred embodiment, the composition after molding has a flexural modulus at 23°C of at least 1,585,795 kPa and an Izod Notched Impact strength measured at 23°C according to ASTM D256 of at least 214 J/m.

In another preferred embodiment, the composition after molding has a flexural modulus at 23°C of at least 2,068,428 kPa and an Izod Notched Impact strength measured at 23°C according to ASTM D256 of at least 80 J/m.

The composition may exhibit low variability in properties, whether from batch-to-batch, or from sample-to-sample for a given batch. Variability may be calculated in percentage form as 100 times a property's standard deviation divided by the property's mean. The composition may exhibit batch-to-batch variability in Dynatup Total Energy at 23°C of less than 15%, preferably less than 10%. The composition may exhibit batch-to-batch variability in Flexural Modulus at 23°C of less than 10 percent, preferably less than 5%, more preferably less than 3%. The composition may exhibit batch-to-batch variability in Izod Notched Impact Strength measured at 23°C according to ASTM D256 less than 10%.

The invention is further illustrated by the following non-limiting examples.

### EXAMPLES 1-20, COMPARATIVE EXAMPLE 1

Components utilized in the preparation of the thermoplastic composition are listed and described in Table 1.

**Table 1**

| Abbreviation | Description |
|---|---|
| PP, PD403 | isotactic propylene polymer obtained as PD403 (pellet form) from Montell Polyolefin Inc. |
| PP, PH280 | isotactic propylene polymer obtained as PH280 (particulate form) from Montell Polyolefin Inc. |
| EPR | Ethylene-propylene copolymer, obtained as VISTALON® 878 (pellet form) from ExxonMobil Chemical |
| EBR | Ethylene-butylene copolymer, obtained as EXACT® 4033 (pellet form) from ExxonMobil Chemical |
| PP-EPR, HECO-20 | Polypropylene with ethylene-propylene rubber (EPR) as heterophasic/pre-dispersed, EPR content = 20 weight %, obtained as Profax 7624 (pellet form) from Montell Polyolefin Inc. |
| PP-EPR, HECO-30 | Polypropylene with ethylene-propylene rubber (EPR) as heterophasic/pre-dispersed, EPR content = 30 weight %, obtained as Profax 7624 (pellet form) from Montell Polyolefin Inc. |
| PP-EBR, HECO-EBR | Polypropylene with ethylene-butene rubber (EBR) as heterophasic/pre-dispersed, EBR content = 60 weight %, obtained as ADFLEX® KS021 P (pellet form) from Montell Polyolefin Inc. |
| PP-g-PS | Polypropylene-polystyrene graft copolymer, obtained as Interloy P1045H1 (pellet form) from Montell Polyolefin Inc. |
| PPE | poly(2,6-dimethylphenylene ether), intrinsic viscosity (IV) = 0.4 dl/g, obtained in powdered form from General Electric Company |
| xPS | homopolystyrene, obtained as Chevron EB3300 (pellet form) from Huntsman Chemical |
| HIPS | rubber-modified polystyrene having a polystyrene molecular weight of 230,000 g/mol and 10.3 weight% polybutadiene, obtained as GEH 1897 (pellet form) from General Electric Company |
| SBS | unhydrogenated styrene-butadiene-styrene triblock copolymer having about 31 % polystyrene, obtained as KRATON® D1101 (pellet form) from Shell Chemical Company |
| SEBS G1652 | hydrogenated styrene-butadiene-styrene triblock copolymer (also known as styrene-(ethylene-butadiene)-styrene triblock copolymer), 28 weight % polystyrene, obtained as KRATON® G1652 (pellet form) from Shell Chemical Company |
| SEBS H1043 | hydrogenated styrene-butadiene-styrene triblock copolymer (also known as styrene-(ethylene-butadiene)-styrene triblock copolymer), 66 weight % polystyrene, obtained as TUFTEC® H1043 (pellet form) from Asahi Chemical |

General Blending/Compounding Procedure: Using quantities specified in Table 2, PP-g-PS, PPE, xPS, HIPS, SEBS, and SBS were hand mixed in a bag. Unless otherwise specified, all component amounts are expressed in parts by weight. The resulting mixture was subsequently mixed aggressively with a mechanical blender for uniformity. The uniform mixture was subsequently fed through a feeder and entered into an extruder at the extruder initial entry point. In the instance when the quantity of the polystyrene or rubber-modified polystyrene components were each equal to or greater than 10% of the total blend weight, the polystyrene or rubber-modified polystyrene components were fed thorough a separate upstream feeder. Components PP and EPR or EBR, in quantities specified in Table 2, were fed downstream. The entry points were located after the feed throat, at approximately barrel 5 of a 10-barrel extruder.

General Extrusion: a 30 millimeter co-rotating twin-screw extruder was used. Blends were melt extruded at 271.1°C, 450-500 rpm, and a throughput rate of 13.6-24.9 kilos per hour. Melt from the extruder was forced through a three-hole die to produce melt strands. These strands were rapidly cooled by passing them through a cold-water bath. The cooled strands were chopped into pellets. Pellets were dried in an oven at 93.3°C for 2-4 hours.

General Molding: ASTM parts were molded on a 120 tonne molding machine (manufacturer Van Dorn) at 232.2-287.8°C barrel temperature and 37.8-48.9°C mold temperature.

Parts were tested according to ASTM methods. Izod notched impact was measured at 23°C and -30°C according to ASTM D256. Dynatup (falling dart) total energy and energy to failure were measured at 23°C and -30°C at 8 and 12.1 km/h according to ASTM D3763. Heat distortion temperature (HDT) was measured at 455.1kPa and 1820.2kPa on 3.175 mm samples according to ASTM D648. Flexural modulus and flexural strength at yield were measured at 23°C on 3.175 mm samples according to ASTM D790. Tensile strength at yield, tensile strength at break, and tensile elongation at break were measured at 23°C according to ASTM D638. Where presented, standard deviations reflect measurements on five samples.

The results are presented in Table 2. Formulations of the invention, represented by Examples 1-20, exhibit excellent balance of physical properties, especially their balance of impact strength and stiffness. Comparison of Example 19 and Comparative Example 1 illustrates the effect of the styrene content of the hydrogenated block copolymer. Compared to Comparative Example 1, utilizing a hydrogenated block copolymer with 28 weight percent styrene, Example 19, utilizing a hydrogenated block copolymer with 66 weight percent styrene, exhibits superior ambient and low temperature impact strength (see, for example, "Notched Izod, 23°C", "Total Energy, 23°C, 12.1 km/h", "Energy to Failure, 23°C, 12.1 km/h", "Total Energy, -30°C, 12.1 km/h"), superior stiffness (see, for example, "Flexural Modulus, 23°C" and "Flexural Strength at Yield"), superior tensile strength (see, for example, "Tensile Strength at Yield", "Tensile Strength at Break", and "Tensile Elongation at Break"), and dramatically reduced property variability (see standard deviations for all of above properties).

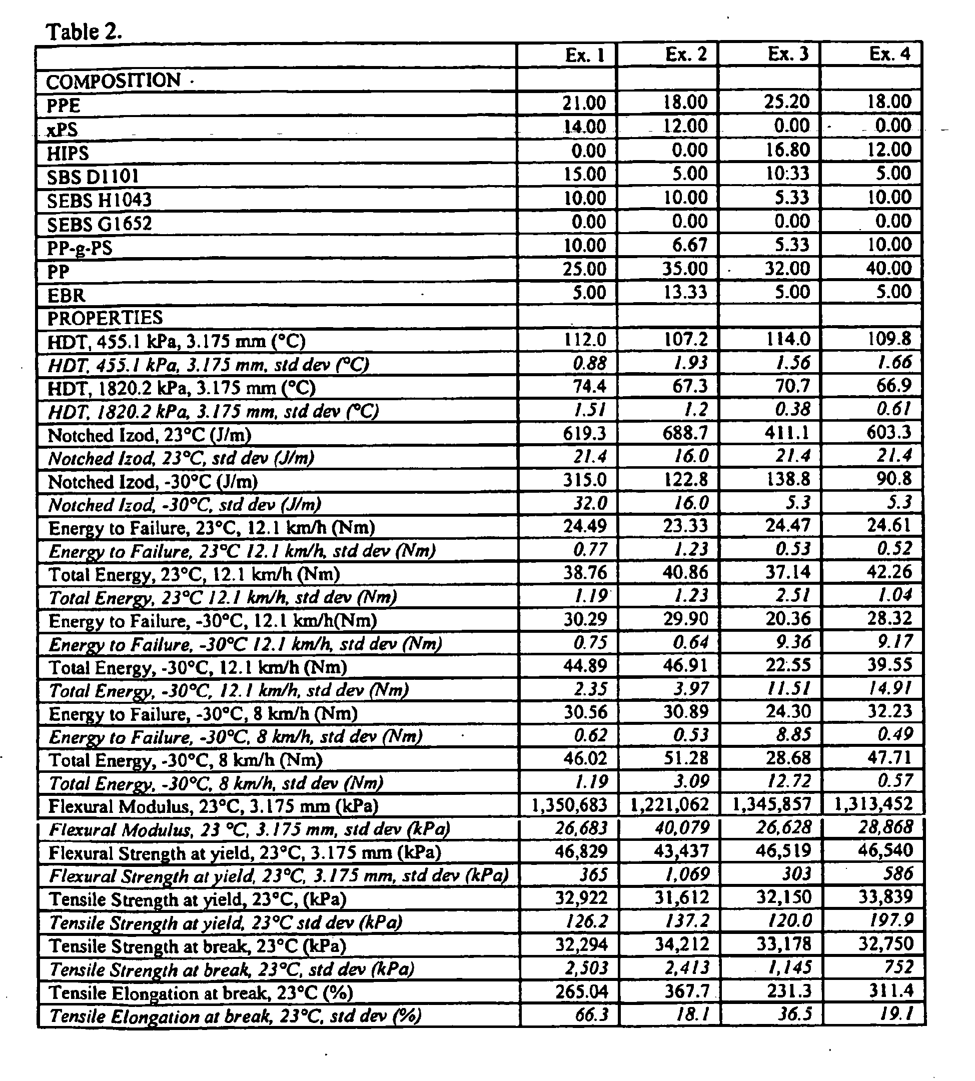

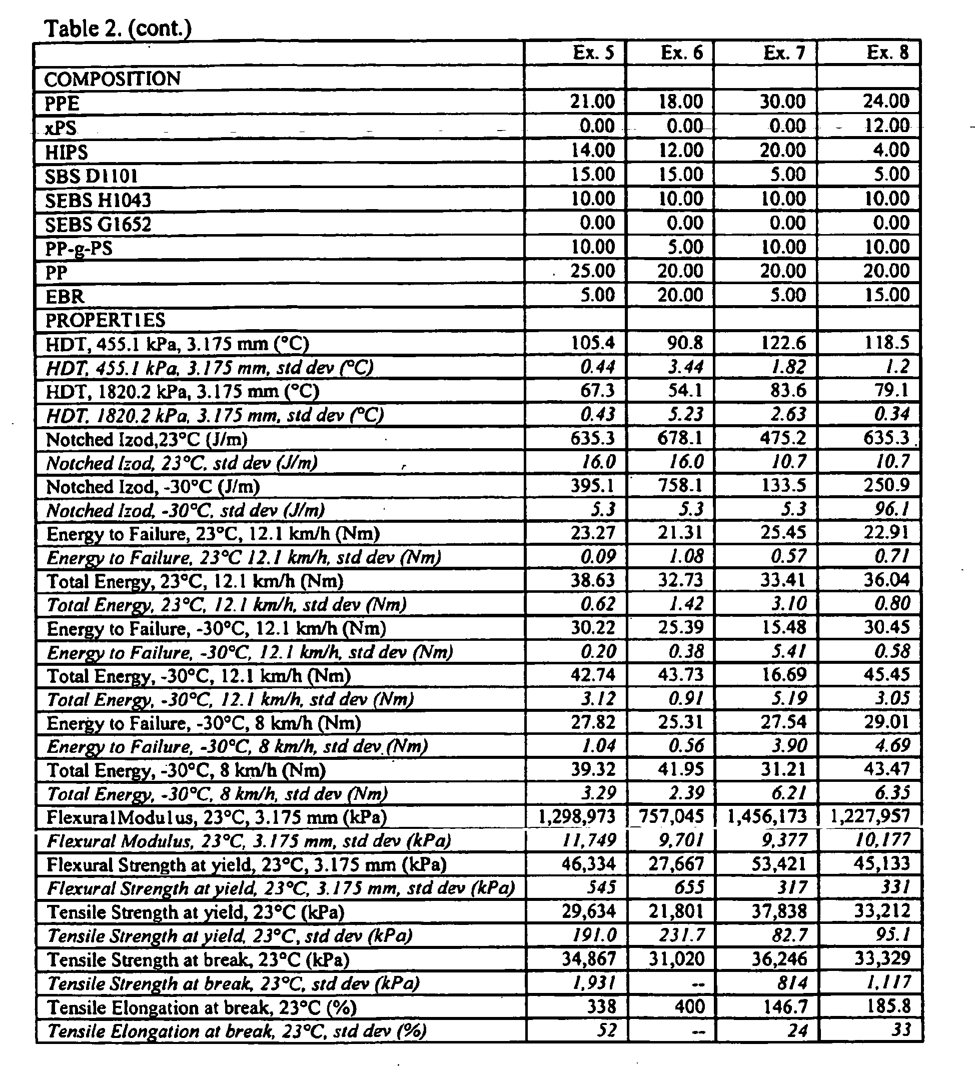

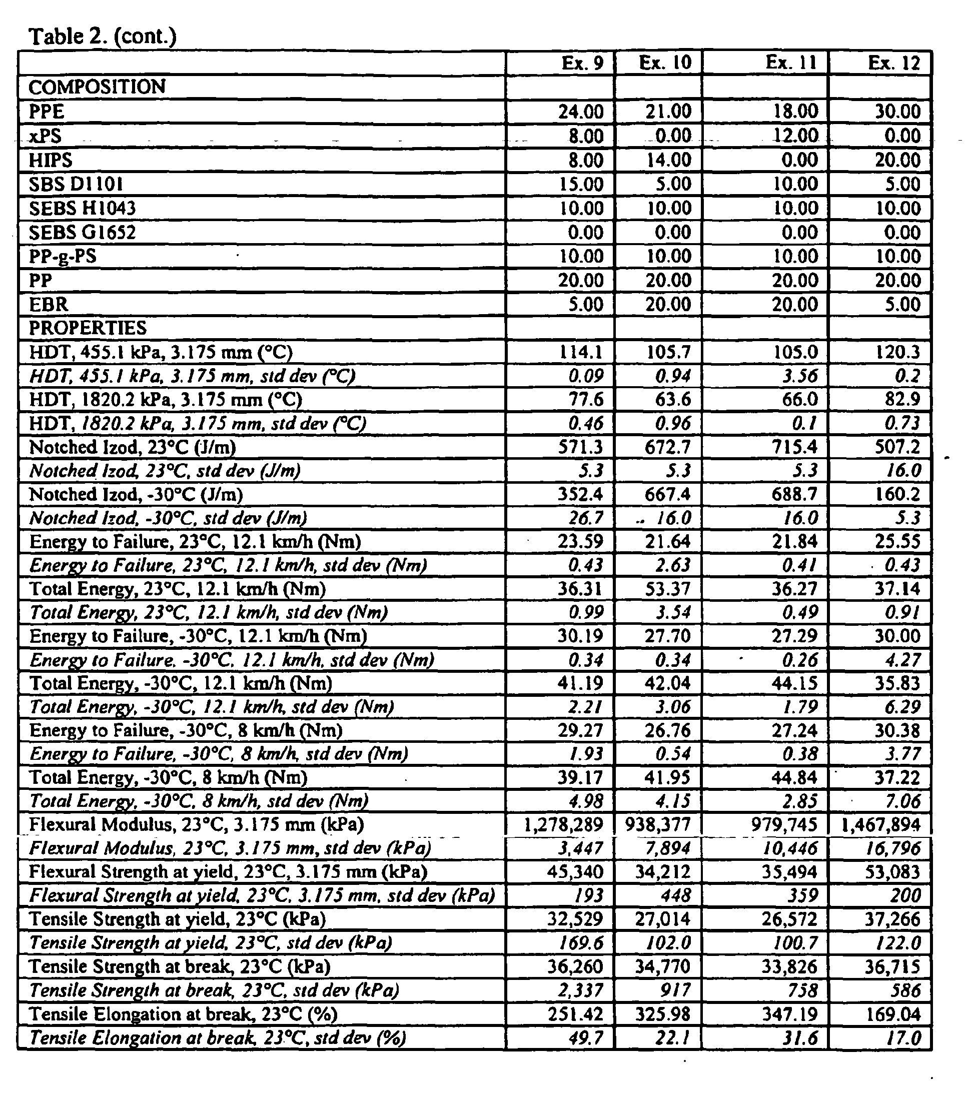

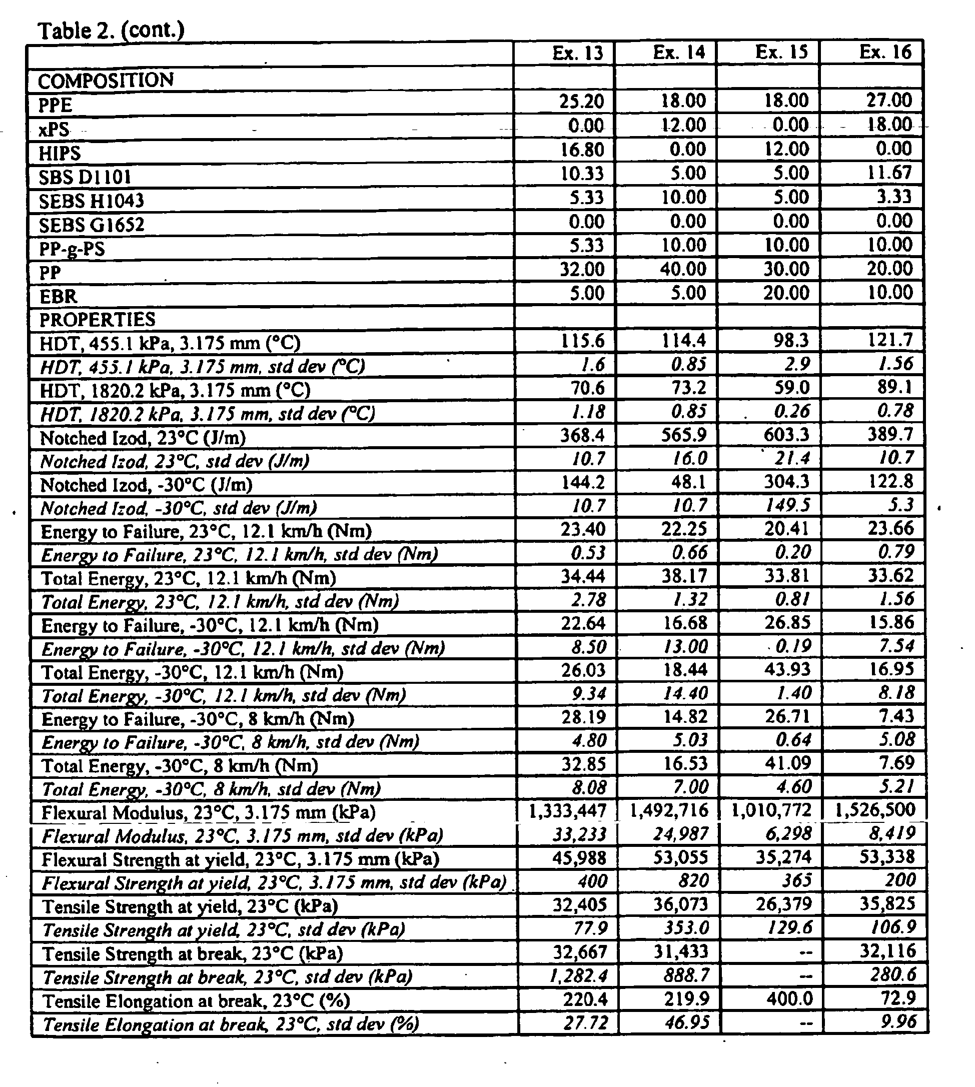

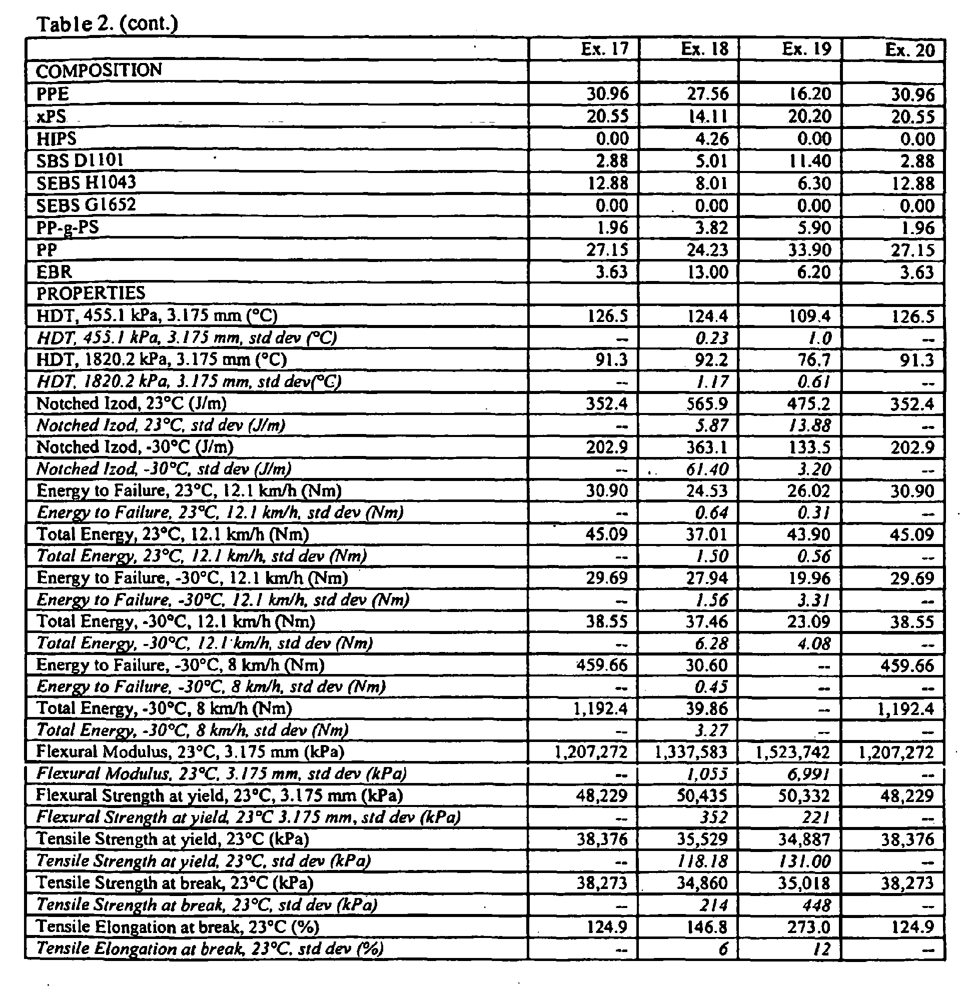

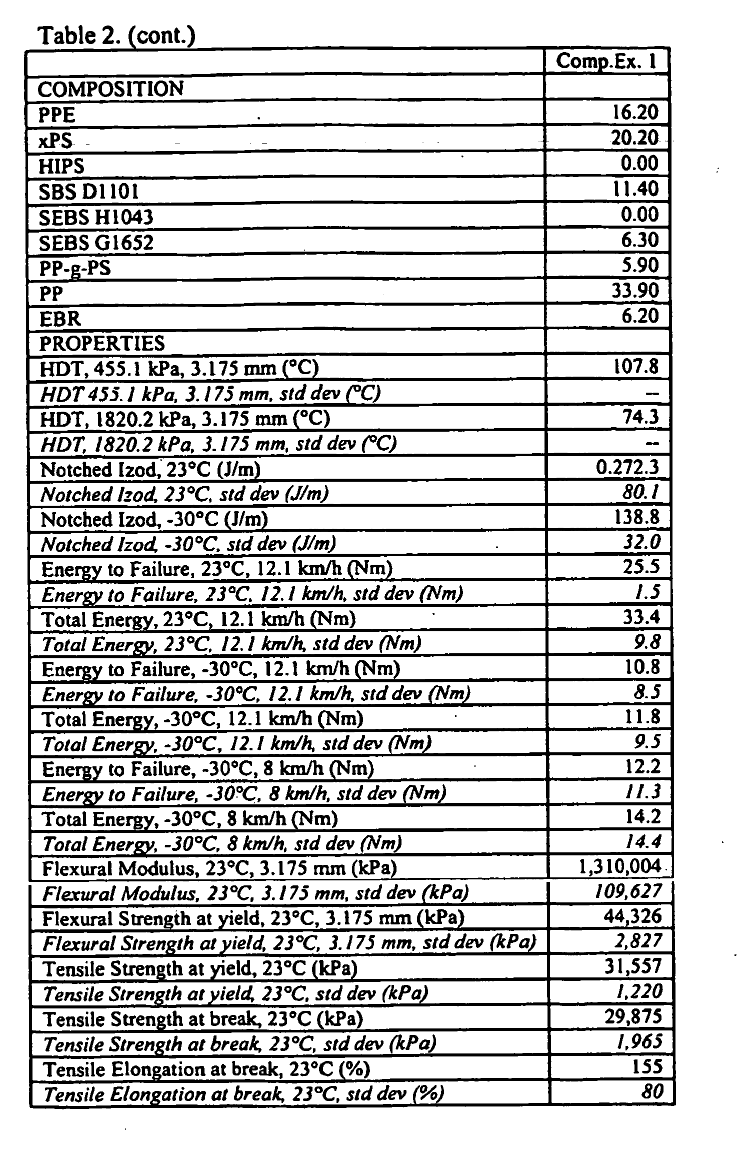

### EXAMPLES 21-25

Five example formulations including homopolystyrene but not rubber-modified polystyrene were prepared and tested according to the procedures described above. Results are presented in Table 3 and show excellent property balance.

**Table 3.**

| | Ex. 21 | Ex. 22 | Ex.23 | Ex. 24 | Ex. 25 |
|---|---|---|---|---|---|
| COMPOSITION | | | | | |
| PP | 1215 | 22.i5 | 30.00 | 20.00 | 12.15 |
| EPR | 3.63 | 3.63 | 506 | 5.00 | 3.63 |
| PP-g-PS | 6.96 | 6.96 | 3.33 | 10.00 | 1.96 |
| SBS | 2.88 | 12.88 | 5.00 | 5.00 | 2.88 |
| SEBS H1043 | 12.88 | 2.88 | 6.67 | 10.00 | 2.88 |
| xPS | 30.55 | 20.55 | 20.00 | 20.00 | 45.55 |
| PPE | 30.96 | 30.96 | 30.00 | 30.00 | 30.96 |

| PROPERTIES | | | | | |
|---|---|---|---|---|---|
| Flexural Modulus, 23°C, 3.175 mm (kPa) | 1,986,380 | 1,597,516 | 1,707,832 | 1,793,327 | 2,415,924 |
| Flexural Strength at yield, 23°C, 3.175 mm (kPa) | 59,495 | 56,420 | 62,136 | 65,486 | 88,529 |
| HDT, 455.1 kPa, 3.175 mm (°C) | 126.2. | 129.5 | 128.3 | 118.2 | -- |
| HDT, 1820.2 kPa, 3.175 mm (°C) | 100.9 | 94.8 | 91.0 | 93.1 | 105.2 |
| Notched Izod, 23°C (J/m) | 405.8 | 154.8 | 299.0 | 411.1 | 90.8 |
| Notched Izod, -30°C (J/m) | 138.8 | 80.1 | 58.7 | 48.1 | 48.1 |
| Unnotched Izod, 23°C, 3.175 mm (J/m) | 1,655.1 | 1,836.6 | -- | -- | 688.7 |
| Energy to Failure, 23°C, 12.1 km/h (Nm) | 45.7 | 36.2 | 27.8 | 25.5 | 3.9 |
| Total Energy, 23°C, 12.1 km/h (Nm) | 27.46 | 5.40 | 42.37 | 37.07 | 5.00 |
| Energy to Failure, -30°C, 12.1 km/h (Nm) | 37.77 | 5.78 | 4.15 | 2.07 | 0.99 |
| Total Energy, -30°C, 12.1 km/h (Nm) | 23.69 | 2.03 | 4.43 | 2.25 | 1.25 |
| Energy to Failure, -30°C, 8 km/h (Nm) | 26.86 | 2.22 | 8.77 | 2.29 | 11.24 |
| Total Energy, -30°C, 8 km/h (Nm) | 28.05 | 2.01 | 9.68 | 2.43 | 179.1 |
| Tensile Strength at yield, 23°C (kPa) | 41,686 | 38,590 | 42,596 | 44,051 | 59,991 |
| Tensile Stress at break, 23°C (kPa) | 39,969 | 37,832 | 37,108 | 37,921 | 47,836 |
| Tensile Elongation at break, 23°C (%) | 83.07 | 26.19 | 120.26 | 92.29 | 20.84 |

### EXAMPLES 26-28, COMPARATIVE EXAMPLES 2-4

These examples and comparative examples illustrate the advantage of the invention in reducing batch-to-batch and sample-to-sample property variability. Samples were formulated and tested as described above. Examples 26-28 represent three different batches having the composition shown for Example 19 in Table 2, above, utilizing a hydrogenated block copolymer having a styrene content of 66%. Comparative Examples 2-4 represent three different batches having the composition shown for Comparative Example 1 in Table 2, above, utilizing a hydrogenated block copolymer having a styrene content of 28%. Property results are given in Table 4. The results show that batch-to-batch variations in properties, especially impact strength properties, are consistently and substantially lower for the formulations of Examples 26-28 compared to the formulations of Comparative Examples 2-4.

**Table 4**

| | no. of samples | Comp. Ex. 2 | Comp. Ex. 3 | Comp. Ex. 4 | Mean for C. Exs. 2- | std dev for C. Exs. 2-4 | Ex. 26 | Ex. 27 | Ex. 28 | Mean for Exs. 26-28 | std dev for Exs. 26-28 |
|---|---|---|---|---|---|---|---|---|---|---|---|
| HDT @ 455.1. kPa, 3.175 mm (°C) | 3 | 109.1 | 105 | 109.3 | 107.8 | 2.39 | 110.5 | 109.7 | 108.5 | 109.4 | 1.0 |
| *std. dev.* | | 2.19 | 0.69 | 1.13 | | | 1.48 | 0.68 | 0.78 | | |
| HDT @ 1820.2 kPa, 3.175 mm (°C) | 3 | 76.3 | 72.2 | 74.5 | 74.4 | 2.06 | 77.3 | 76.7 | 76.1 | 76.7 | 0.61 |
| *std. dev.* | | 0.31 | 1.65 | 0.96 | | | 1.25 | 2.03 | 0.56 | | |
| Notched Izod, 23°C (J/m) | 5 | 224.2 | 368.4 | 229.6 | 272.3 | 80.1 | 464.5 | 469.8 | 491.2 | 475.2 | 16.0 |
| *std. dev.* | | 5.3 | 10.7 | 10.7 | | | 21.4 | 26.7 | 10.7 | | |
| Notched Izod, -30°C (J/m) | 5 | 112.1 | 176.2 | 122.8 | 138.8 | 32.0 | 133.5 | 128.1 | 133.5 | 133.5 | 5.3 |
| *std. dev.* | | 10.7 | 5.3 | 10.7 | | | 5.3 | 5.3 | 5.3 | | |
| Energy to Failure, 23°C, 12.1 km/h (Nm) | 5 | 23.77 | 26.56 | 26.33 | 25.5 | 1.5 | 25.86 | 26.38 | 25.81 | 26.0 | 0.3 |
| *std. dev* | | 2.94 | 0.38 | 0.57 | | | 0.22 | 0.45 | 0.28 | | |
| Total Energy, 23°C, 12.1 km/h (Nm) | 5 | 24.83 | 43.94 | 31.39 | 33.4 | 9.8 | 44.31 | 43.26 | 44.12 | 43.9 | 0.5 |
| *std. dev.* | | 3.1 | 2.28 | 2.86 | | | 1.65 | 2.52 | 0.80 | | |
| Energy to Failure, -30°C, 12.1 km/h (Nm) | 5 | 4.38 | 20.51 | 7.70 | 10.8 | 8.5 | 17.23 | 19.00 | 23.63 | 19.9 | 3.3 |
| *std. dev.* | | 1.36 | 11.99 | 4.81 | | | 11.85 | 7.95 | 8.96 | | |
| Total Energy, -30°C, 12.1 km/h (Nm) | 5 | 4.65 | 22.55 | 8.07 | 11.8 | 9.5 | 19.31 | 22.55 | 27.41 | 23.0 | 4.1 |
| *std. dev.* | | 1.41 | 13.67 | 4.98 | | | 14.17 | 13.45 | 12.65 | | |
| Energy to Failure, -30°C, 8 km/h (Nm) | 5 | 3.58 | 24.9 | 8.12 | 12.2 | 11.3 | 28.21 | 30.13 | 30.90 | 29.7 | 1.4 |
| *std. dev.* | | 3.32 | 9.49 | 6.21 | | | 3.81 | 0.38 | 0.43 | | |
| Total Energy, -30°C, 8 km/h (Nm) | 5 | 3.76 | 30.76 | 8.38 | 14.2 | 14.5 | 36.36 | 36.96 | 46.99 | 40.1 | 6.0 |
| *std. dev.* | | 3.42 | 14.45 | 6.32 | | | 9.92 | 5.53 | 5.63 | | |
| Flexural Modulus, 23°C, 3.175 mm (kPa) | 3 | 1,404,705 | 1,189,967 | 1,338,962 | 1,310,004 | 110,316 | 1,526,500 | 1,521,674 | 1,512,710 | 1,523,742 | 6,895 |
| *std. dev.* | | 11,321 | 6,936 | 18,940 | | | 7,701 | 9,080 | 12,969 | | |
| Flexural Strength at yield, 23°C, 3.175 mm (kPa) | 3 | 46,712 | 41,203 | 45,071 | 44,326 | 2,827 | 50,580 | 50,159 | 50,263 | 50,332 | 221 |
| *std. dev.* | | *152* | *214* | *386* | | | *221* | *138* | *76* | | |
| Tensile Strength at yield, 23°C, 50.8mm/min (kPa) | 5 | 32,619 | 30,220 | 31,826 | 31,557 | 1,220 | 35,005 | 34,908 | 34,743 | 34,887 | 131 |
| *std. dev.* | | *43.78* | *143.4* | *160.0* | | | *0* | *70.3* | *70.3* | | |
| Tensile Strength at break, 23°C, 50.8mm/min (kPa) | 5 | 28,979 | 32,130 | 28,517 | 29,875 | 1,965 | 35,536 | 34,722 | 34,798 | 35,018 | 448 |
| *std. dev.* | | *437.8* | *600* | *331* | | | *0* | *834* | *138* | | |
| Tensile Elongation at break, 23°C, 50.8mm/min (%) | 5 | 91 | 247.77 | 125.17 | 155 | 82 | 277.22 | 259.83 | 281.98 | 273 | 12 |
| *std. dev.* | | *16* | *12* | *7.8* | | | *0* | *24* | *3.6* | | |

### EXAMPLE 29, COMPARATIVE EXAMPLES 5-10

This example and these comparative examples collectively illustrate the advantages of the composition in molding applications requiring high melt strength. The Example 29 formulation consisted of 27.6 weight percent PPE, 14.1 weight percent xPS, 4.3 weight percent HIPS, 5.0 weight percent SBS, 8.0 weight percent SEBS, 3.8 weight percent PP-g-PS, 24.3 weight percent PP, and 13.0 weight percent EBR. Comparative Example 5 used the acrylonitrile-butadiene-styrene (ABS) resin obtained as CYCLOLAC® Z-48 from General Electric Company and dried for 4 hours at 98.9°C before use. Comparative Example 6 used the polycarbonate/ABS blend obtained as CYCOLOY® GPB2800 from General Electric Company. Comparative Example 7 used the acrylic-styrene-acrylonitrile (ASA) terpolymer obtained as GELOY® CR7010 from General Electric Company. Comparative Example 8 used the polycarbonate resin obtained as LEXAN® PK2870 from General Electric Company. Comparative Example 9 used the poly(arylene ether) resin obtained as NORYL® BN9003 from General Electric Company. Comparative Example 10 used the polycarbonate-poly(butylene terephthalate) blend obtained as XENOY® 1403B from General Electric Company.

Melt strength is a critical property for blow molding because it dictates the maximum size of parts, processing consistency, and the size of the processing window. In blow molding, a semi-solid tube of the molded material (a parison) is extruded trough a ring-shaped die. The extruded tube must maintain its integrity and semi-solid state while it is extruded and hanging in place as the mold closes around it. Melt strength can thus be measured in terms of a hang time, which may be defined as the time required for a parison of specific volume and geometry to sag/stretch a predetermined distance. A longer hang time corresponds to a higher melt strength. For these experiments, the hang time test used an APV Blow Molder with a 0.9526 kg shot capacity. Test conditions included a 63.5 mm diameter low work screw with 24:1 ratio of parison length to outer diameter; a single cardioid head design; a step mold; a screw speed of 25 rotations per minute (rpm); a die gap of 35%; a blow air pressure of 551.6 kPa; and a mold temperature of 80°C. Three measurements were conducted for each composition, and the ranges of values obtained are presented in Table 5. The results show that the composition exhibits a much longer hang time than the commercially available materials. This indicates that the composition is suitable for blow molding large parts.

**Table 5**

| | hang time (sec) |
|---|---|
| Ex. 29 | 30-35 |
| Comp. Ex. 5 | 8-9 |
| Comp. Ex. 6 | 11-13 |
| Comp. Ex. 7 | 15-18 |
| Comp. Ex. 8 | 5-6 |
| Comp. Ex. 9 | 9-11 |
| Comp. Ex. 10 | 9-11 |

### EXAMPLE 30

This example illustrates that excellent property balances can be obtained even when the composition does not include a polypropylene-polystyrene graft copolymer. The formulation was compounded and properties were measured as described in Examples 1-20, above. Formulation details and properties are given in Table 6, below.

**Table 6**

| | Ex. 30 |
|---|---|
| COMPOSITION | |
| PPE | 24.00 |
| xPS | 31.07 |
| SBS | 10.00 |
| SEBS H1043 | 10.00 |
| PP, PD403 | 10.00 |
| EPR | 14.93 |

| PROPERTIES | |
|---|---|
| Flexural Modulus, 23°C, 3.175 mm (kPa) | 1,758,853 |
| Flexural Strength at Yield, 23°C, 3.175 mm (kPa) | 51,862 |
| HDT, 455.1 kPa, 3.175 mm (°C) | 112.0 |
| HDT, 1820.2 kPa, 3.175 mm (°C) | 87.9 |
| Notched Izod, 23°C (J/m) | 646.0 |
| Notched Izod, -30°C (J/m) | 501.9 |
| Unnotched Izod, 23°C (J/m) | 1,281 |
| Energy to Failure, 23°C, 12.1 km/h (Nm) | 24.80 |
| Total Energy, 23°C, 12.1 km/h (Nm) | 36.28 |
| Energy to Failure, -30°C, 12.1 km/h (Nm) | 28.57 |
| Total Energy, -30°C, 12.1 km/h (Nm) | 38.61 |
| Energy to Failure, -30°C, 8 km/h (Nm) | 28.31 |
| Total Energy, -30°C, 8 km/h (Nm) | 38.84 |
| Tensile Strength at Yield, 23°C (kPa) | 32,240 |
| Tensile Strength at Break, 23°C (kPa) | 29,565 |
| Tensile Elongation at Break, 23°C (%) | 68.87 |

### EXAMPLES 31-40

These examples further illustrate that excellent property balances can be obtained even when the composition does not include a polypropylene-polystyrene graft copolymer. They also illustrate the low sample-to-sample variability ot Key properties. Formulations were compounded and properties were measured as described in Examples 1-20, above. Where given, standard deviations are derived from measurements on five samples. Formulations details and properties are given in Table 7, below.

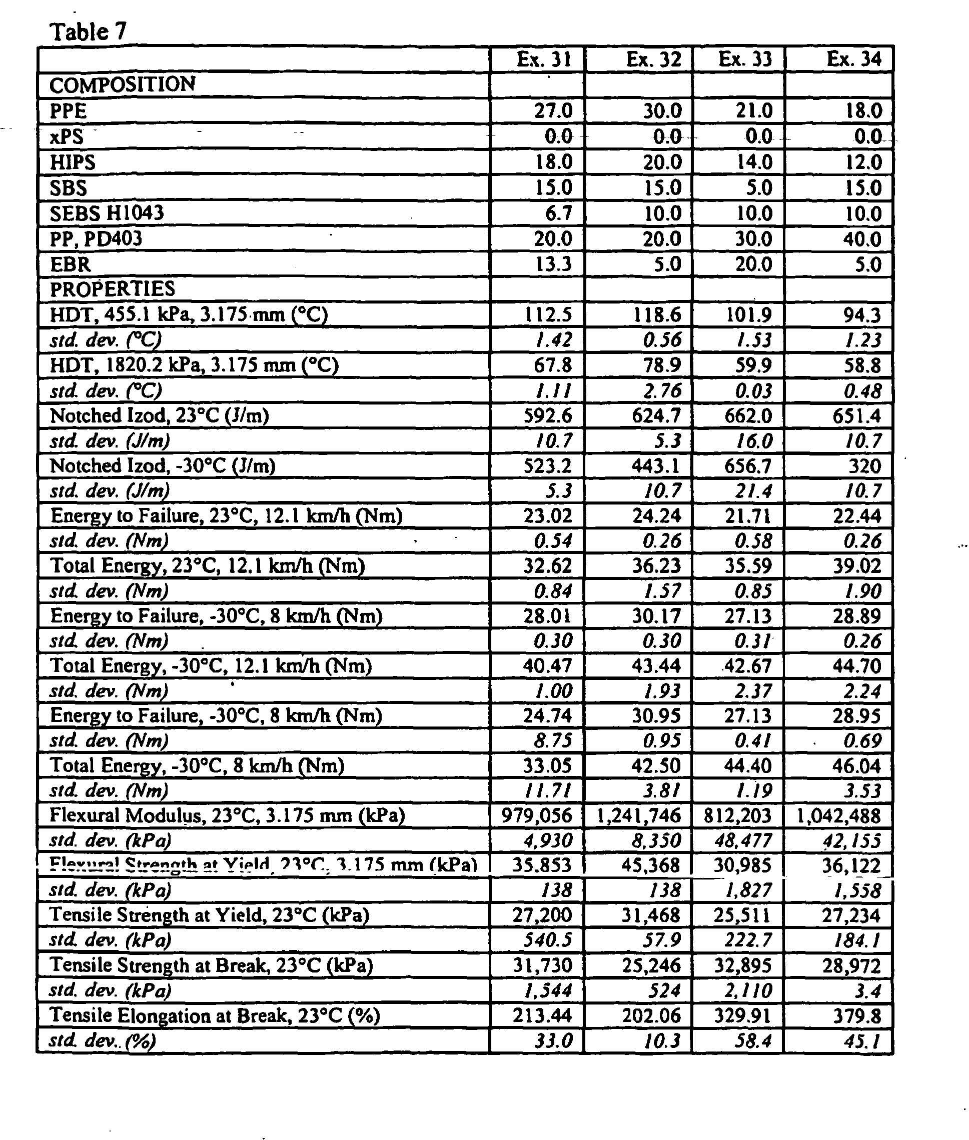

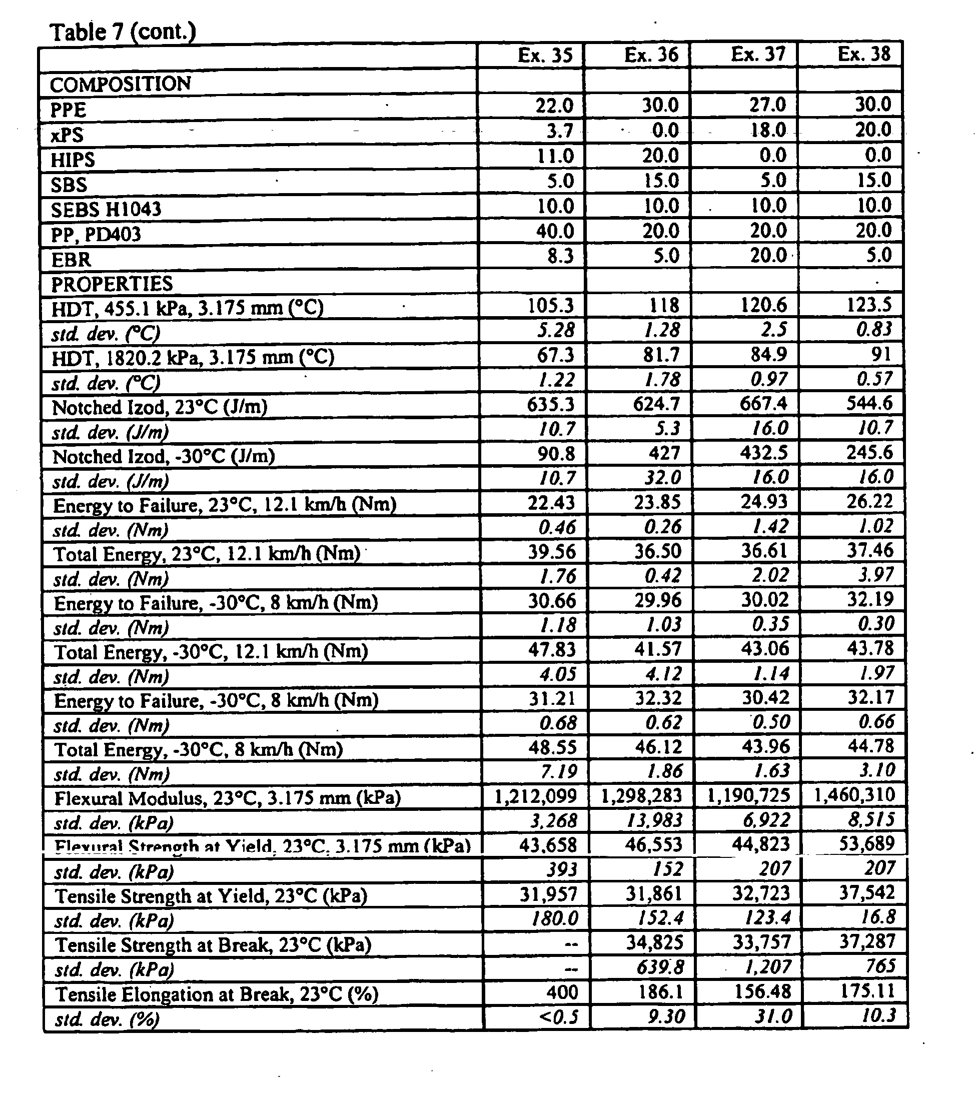

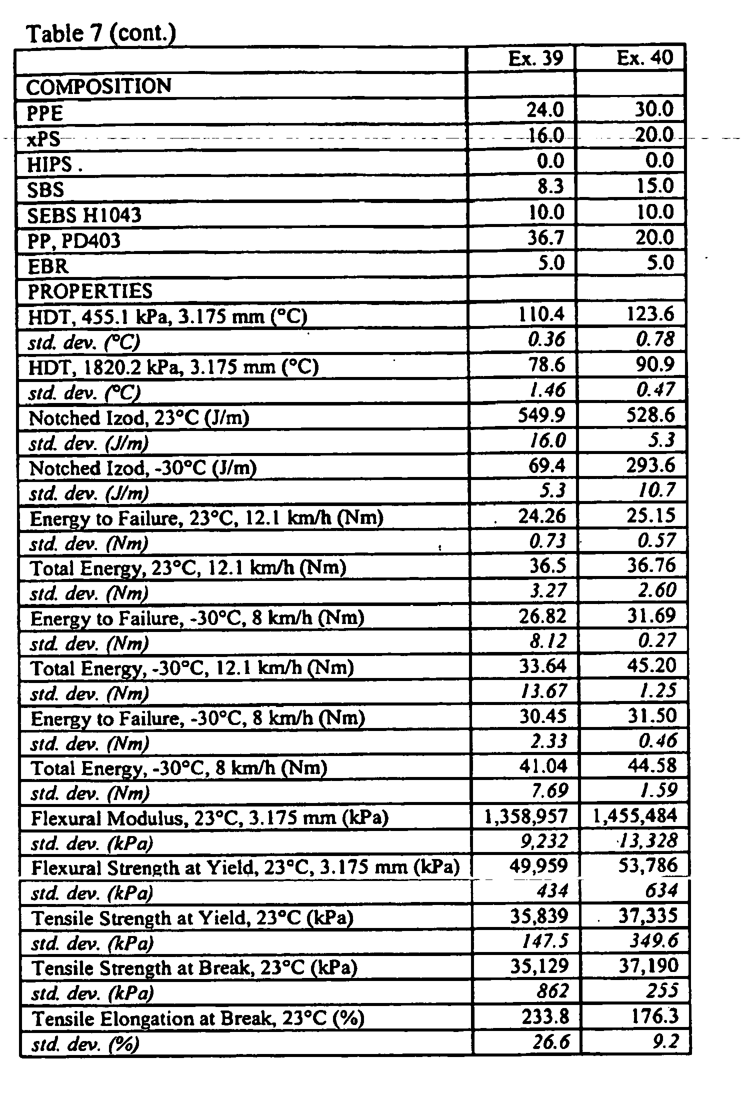

### EXAMPLES 41-47

These examples further illustrate the excellent property balances and low sample-to-sample variability of key properties exhibited by the composition. Formulations were compounded and properties were measured as described in Examples 1-20, above Where given, standard deviations are derived from measurements on five samples. Formulation details and properties are given in Table 8,below.

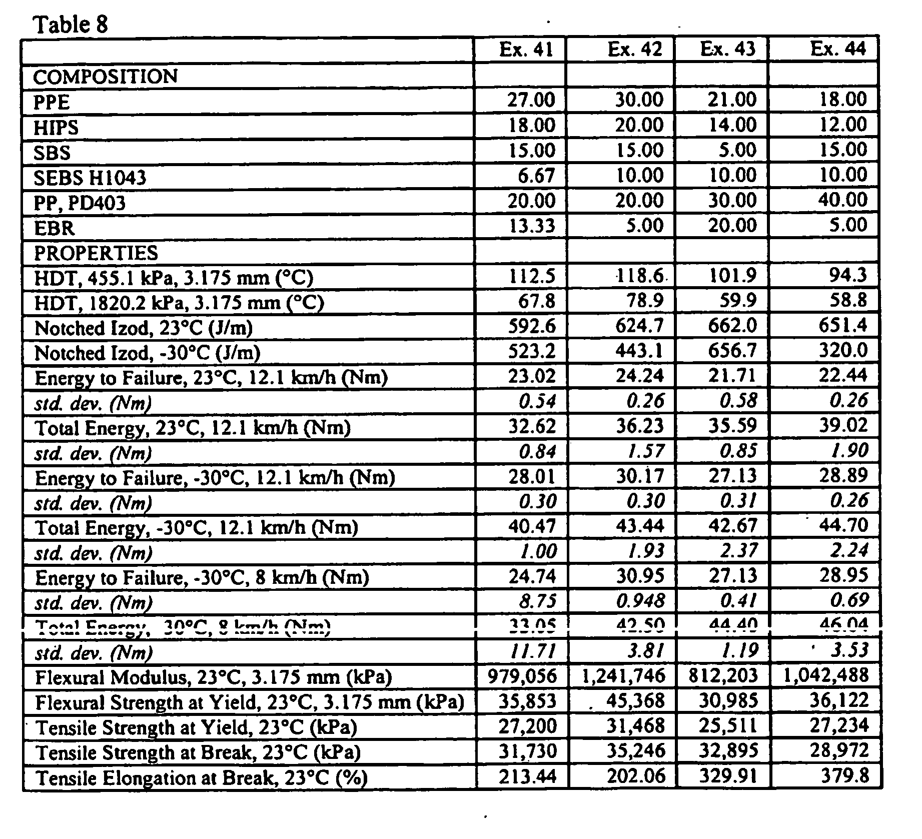

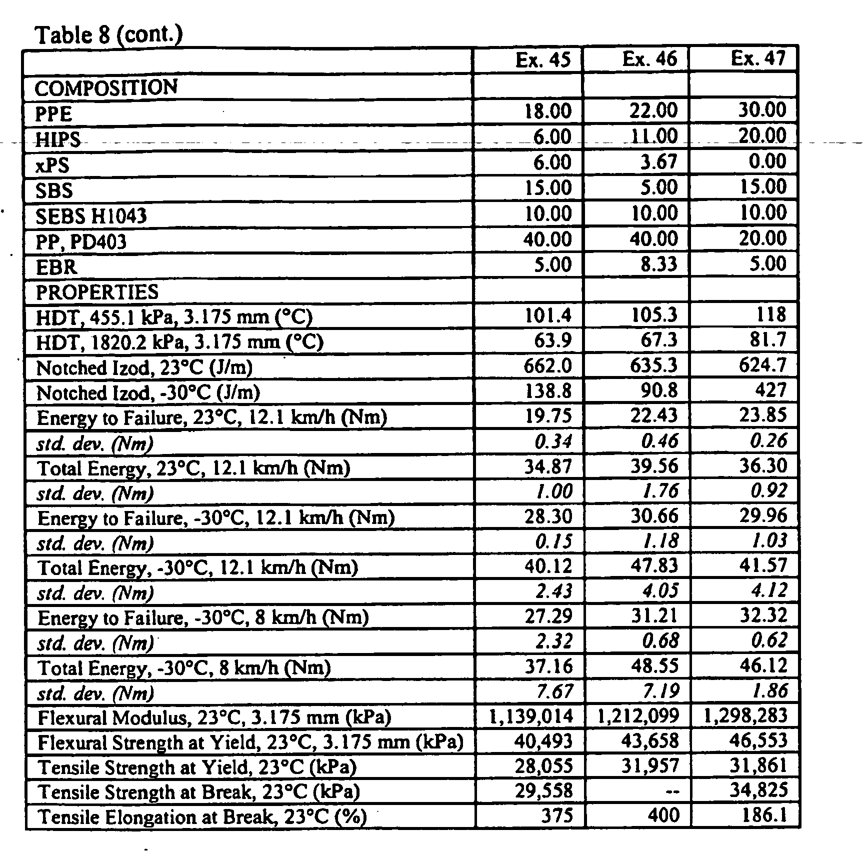

### EXAMPLE 48, COMPAR.ATIVE EXAMPLE 11

This example and comparative example illustrate the improved property balance and reduced sample-to-sample property variability exhibited by samples molded from the composition. Compositions and properties arc given in Table 9, below.

**Table 9**

| | Ex. 48 | C. Ex. 11 |
|---|---|---|
| COMPOSITION | | |
| PPE | 16.20 | 16.20 |
| xPS | 20.20 | 20.20 |
| HIPS | 0.00 | 0.00 |
| SBS | 11.40 | 11.40 |
| SEBS H1043 | 6.30 | 0.00 |
| SEBS, G 1652 | 0.00 | 6.30 |
| PP, PD403 | 33.80 | 33.90 |
| EPR | 6.30 | 6.30 |
| PP-g-PS | 5.90 | 5.90 |

| PROPERTIES | | |
|---|---|---|
| HDT, 455.1 kPa, 3.175 mm (°C) | 109.4 | 107.8 |
| *sid. dev*., *3 samples (°C)* | *1.0* | *2.39* |
| HDT, 1820.2 kPa, 3.175 mm (°C) | 76.7 | 74.4 |
| *sid dev., 3 samples (°C)* | *0.61* | *2.06* |
| Notched Izod, 23°C (J/m) | 475.2 | 272.3 |
| *std. dev., 5 samples (J*/*m)* | *16.0* | *80.1* |
| Notched Izod, -30°C (J/m) | 133.5 | 138.8 |
| *std dev., 5 samples (J*/*m)* | *5.3* | *32.0* |
| Energy to Failure, 23°C, 12.1 km/h (Nm) | 26.0 | 25.5 |
| *std. dev., 5 samples (Nm)* | *0.3* | *1.5* |
| Total Energy, 23°C, 12.1 km/h (Nm) | 43.9 | 33.4 |
| *std. dev., 5 samples (Nm)* | *0.5* | *9.8* |
| Energy to Failure, -30°C, 12.1 km/h (Nm) | 19.9 | 10.8 |
| *std. dev., 5 samples (Nm)* | *3.3* | *8.5* |
| Total Energy, -30°C, 12.1 km/h (Nm) | 23.0 | 11.8 |
| *std. dev., 5 samples (Nm)* | *4.1* | *9.5* |
| Energy to Failure, -30°C, 8 km/h (Nm) | 29.7 | 12.2 |
| *std. dev., 5 samples (Nm)* | *1.4* | *11.3* |
| Total Energy, -30°C, 8 km/h (Nm) | 40.1 | 14.2 |
| *std. dev., 5 samples (Nm)* | *6.0* | *14.5* |
| Flexural Modulus, 23°C, 3.175 mm (kPa) | 1,523,742 | 1,310,004 |
| *std. dev., 5 samples (kPa)* | *6,895* | *110, 316* |
| Flexural Strength at Yield, 23°C, 3.175 mm (kPa) | 50,332 | 44,326 |
| *std. dev., 5 samples (kPa)* | *221* | *2,827* |
| Tensile Strength at Yield, 23°C (kPa) | 34,887 | 31,557 |
| *sid. dev., 3 samples (kPa)* | *131* | *1,220* |
| Tensile Strength at Break, 23°C (kPa) | 35,018 | 29,875 |
| *std. dev., 5 samples (kPa)* | *448* | *1,965* |
| Tensile Elongation at Break, 23°C (%) | 273 | 155 |
| *std. dev., 5 samples (kPa)* | *12* | *82* |

### EXAMPLES 49-52

These examples illustrate the effect of the ratio of poly(arylene ether) to poly(alkenyl aromatic) on the balance of properties, in particular the balance of flexural modulus and heat distortion temperature. The results, presented in Table 10, show that increasing the xPS:PPE ratio results in increasing mechanical properties such as flexural modulus and flexural strength, while decreasing thermal properties, such as heat distortion temperature, and toughness properties, such as Izod notched impact strength and energy to failure.

**Table. 10**

| | Ex. 49 | Ex. 50 | Ex. 51 | Ex. 52 |
|---|---|---|---|---|
| COMPOSITION | | | | |
| PP, PD403 | 14,30 | 14.30 | 14.30 | 14.30 |
| EPR | 7.26 | 7.26 | 7.26 | 7.26 |
| PP-g-PS | 3.93 | 3.93 | 3.93 | 3.93 |
| SBS | 5.76 | 5.76 | 5.76 | 5.76 |
| SEBS | 5.96 | 5.96 | 5.96 | 5.96 |
| xPS | 16.00 | 20.00 | 25.00 | 30.00 |
| PPE | 46.79 | 42.80 | 37.80 | 32.79 |

| CALCULATED PROPERTIES | | | | |
|---|---|---|---|---|
| Flexural Modulus, 23°C, 3.175 mm (kPa) | 2,102,723 | 2,144,394 | 2,195,947 | 2,247,071 |
| Flexural Strength at Yield, 23°C, 3.175 mm (kPa) | 69,547 | 69,878 | 70,271 | 70,637 |
| HDT, 455.1 kPa, 3.175 mm (°C) | 143.6 | 138.4 | 132.1 | 1.25.8 |
| HDT, 1820.2 kPa, 3.175 mm (°C) | 112.7 | 109.2 | 104.7 | 100.3 |
| Notched Izod, 23°C (J/m) | 317.67 | 306.46 | 292.58 | 279.76 |
| Notched Izod, -30°C (J/m) | 93.97 | 92.36 | 90.23 | 88.63 |
| Unnotched Izod, 23°C, 3.175 mm (J/m) | 701.54 | 656.70 | 603.84 | 555.79, |
| Energy to Failure, 23°C, 12.1 km/h (Nm) | 14.03 | 12.42 | 10.55 | 8.83 |
| Total Energy, 23°C, 12.1 km/h (Nm) | 19.58 | 17.37 | 14.81 | 12.43 |
| Energy to Failure, -30°C, 12.1 km/h (Nm) | 8.83 | 7.67 | 6.44 | 5.41 |
| Total Energy, -30°C, 12.1 km/h (Nm) | 5.57 | 4.62 | 3.73 | 3.08 |
| Energy to Failure, -30°C, 8 km/h (Nm) | 5.31 | 5.00 | 4.28 | 3.38 |
| Total Energy, -30°C, 8 km/h (Nm) | 6.51 | 6.01 | 5.07 | 3.97 |
| Tensile Strength at Yield, 23°C (kPa) | 40,679 | 41,424 | 42,341 | 43,244 |
| Tensile Strength at Break, 23°C (kPa) | 38,452 | 39,107 | 39,900 | 40,686 |
| Tensile Elongation at Break, 23°C (%) | 13.9 | 13.7 | 13.4 | 13.1 |

### EXAMPLES 53-58, COMPARATIVE EXAMPLES 12-17

These examples illustrate the improved impact strength exhibited by the examples of composition, containing an unhydrogenated block copolymer, when compared to comparative examples lacking an unhydrogenated block copolymer. Formulations were compounded and properties were measured as described in Examples 1-20, above. Components are the same as those described in Table 1, except that the poly(arylene ether) (PPE) had an intrinsic viscosity of 0.46 dL/g as measured at 25°C in chloroform. "Additives" refers to a 1:1:3 weight ratio blend of magnesium oxide, zinc sulfide, and tridodecyl phosphite. Formulation details and properties are given in Table 11, below.

The results show that Examples 53-58, containing an unhydrogenated block copolymer, exhibit superior Notched Izod at 23°C, Notched Izod at -30°C, Energy to Maximum Load at -30°C and 12,1 km/h, and Energy to Maximum Load at -30°C and 8.0 km/h, compared to Comparative Examples 12-17, respectively, not containing an unhydrogenated block copolymer.

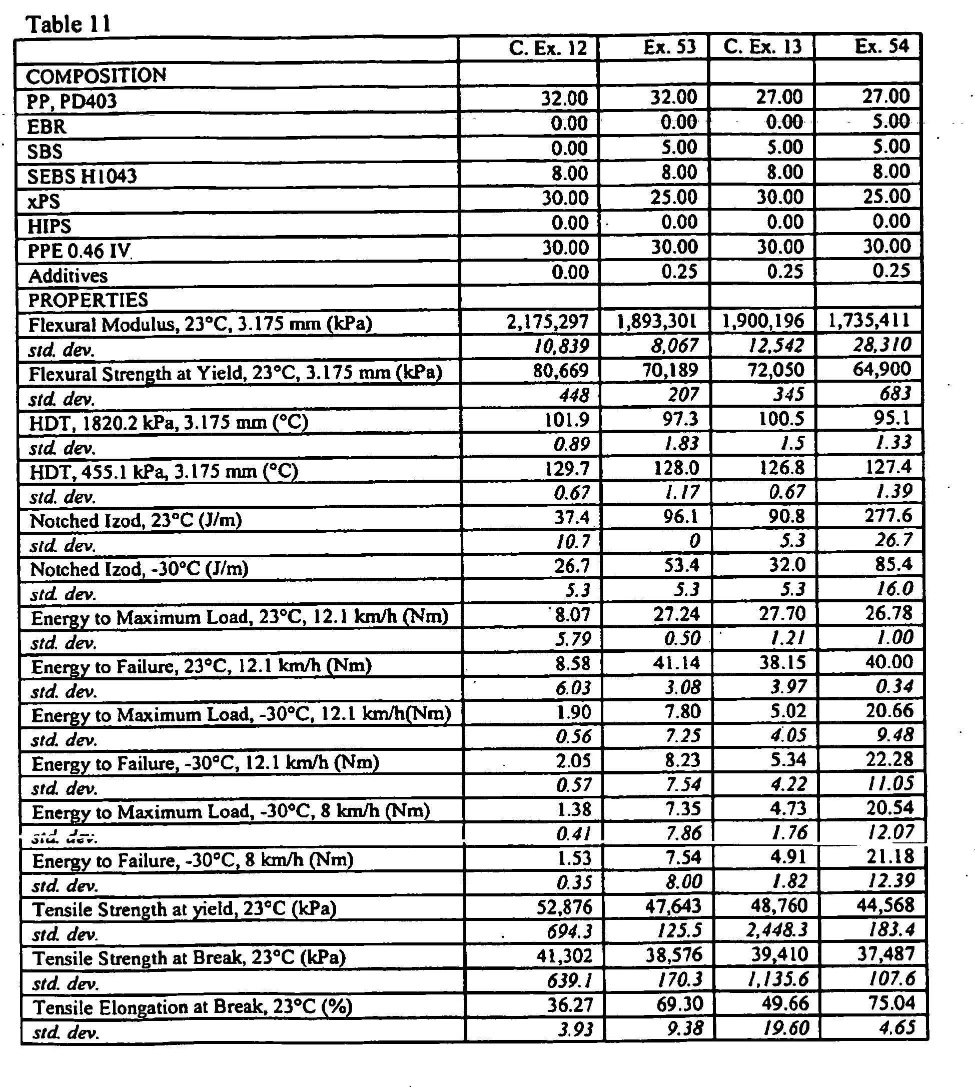

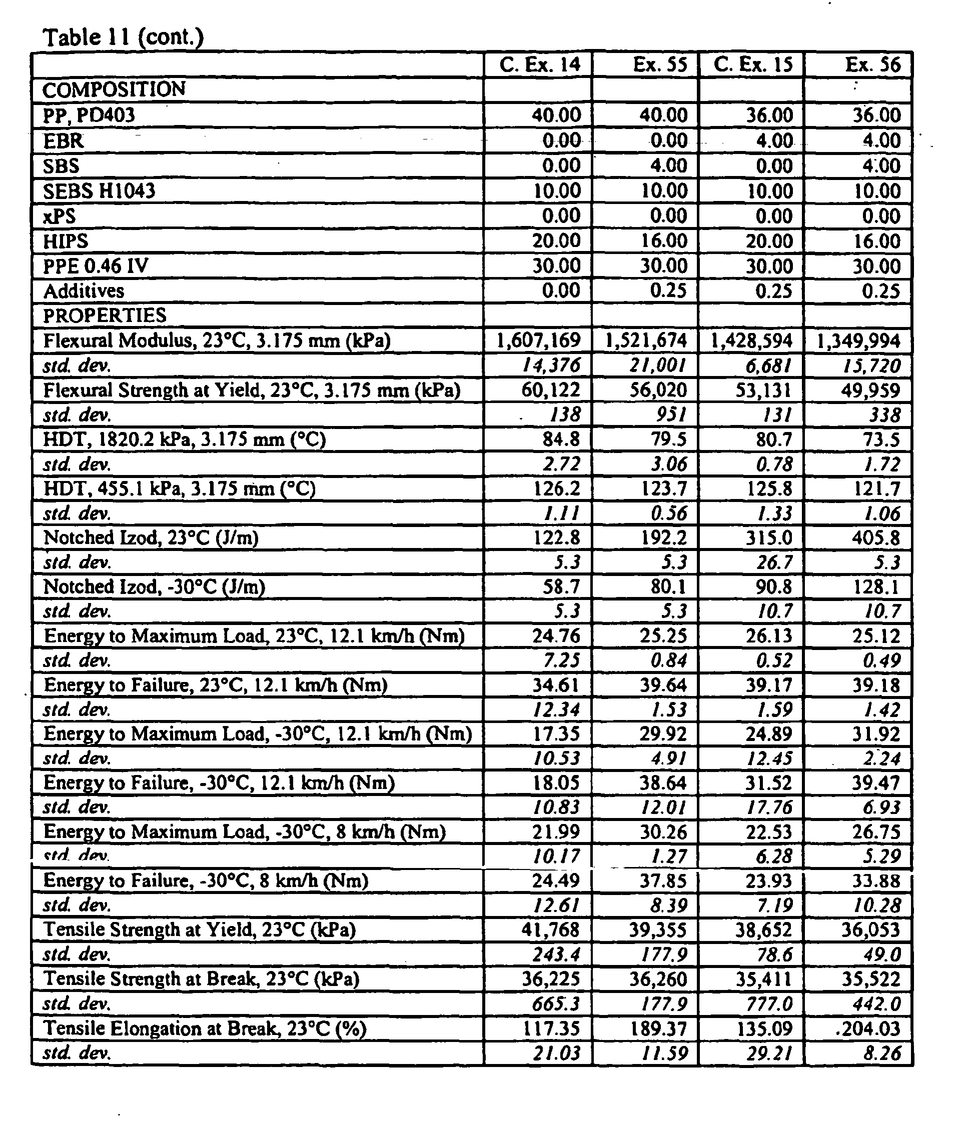

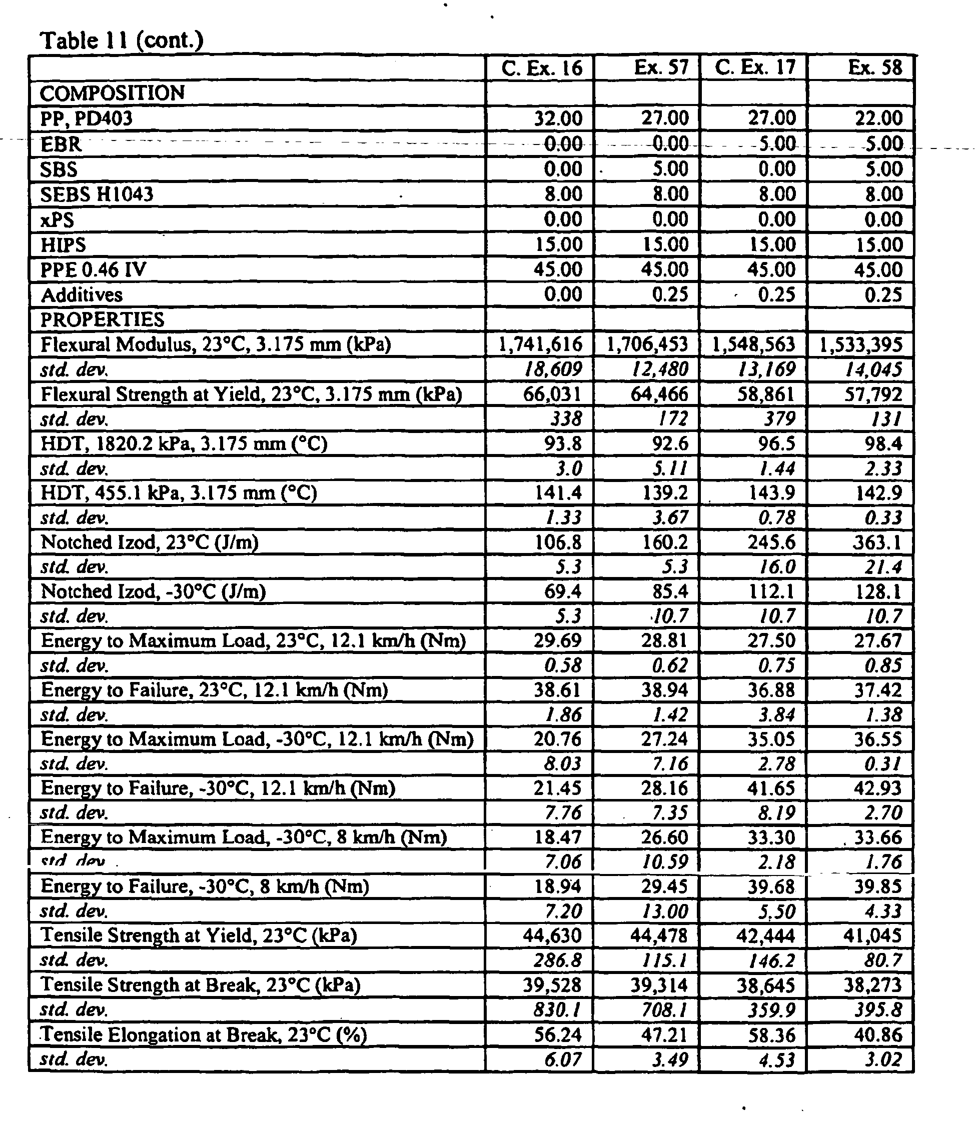

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

## Claims

1. A thermoplastic composition, comprising:
a poly(arylene ether);
a poly(alkenyl aromatic) resin in an amount of at least 30 weight percent of the total of the poly(arylene ether) and the poly(alkenyl aromatic resin;
a polyolefin;
a hydrogenated block copolymer of an alkenyl aromatic compound and a conjugated diene, wherein the hydrogenated block copolymer has an alkenyl aromatic content of 40 to 90 weight percent; and
an unhydrogenated block copolymer of an alkenyl aromatic compound and a conjugated diene.

2. The thermoplastic composition of Claim 1, comprising 10 to 59 weight percent poly(arylene ether), based on the total weight of the composition.

3. The thermoplastic composition of Claim 1, wherein the poly(alkenyl aromatic) resin comprises at least one poly(alkenyl aromatic) resin selected from the group consisting of atactic homopolystyrene, syndiotactic homopolystyrene, rubber-modified polystyrene, and mixtures comprising at least one of the foregoing poly(alkenyl aromatic) resins.

4. The thermoplastic composition of Claim 1, comprising 4 to 46 weight percent poly(alkenyl aromatic) resin, based on the total weight of the composition.

5. The thermoplastic composition of Claim 1, wherein the polyolefin comprises a homopolymer or copolymer having at least 80 weight percent of units derived from polymerization of ethylene, propylene, butylene, or a mixture thereof.

6. The thermoplastic composition of Claim 1, wherein the polyolefin is a propylene polymer; and wherein the propylene polymer is a homopolymer of polypropylene, or a random, graft, or block copolymer of propylene and at least one olefin selected from ethylene and C₄-C₁₀ alpba-olefins, with the proviso that the copolymer comprises at least 80 weight percent of repeating units derived from propylene.

7. The thermoplastic composition of Claim 1, wherein the polyolefin comprises a homopolypropylene.

8. The thermoplastic composition of Claim 1, comprising 10 to 70 weight percent of the polyolefin, based on the total weight of the composition.

9. The thermoplastic composition of Claim 1, wherein the hydrogenated block copolymer comprises:
(A) at least one block derived from an alkenyl aromatic compound having the formula 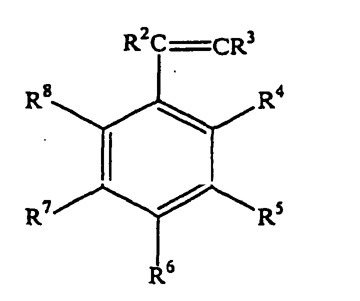 wherein R² and R³ each represent a hydrogen atom, a C₁-C₈ alkyl group, or a C₂-C₈ alkenyl group; R⁴ and R⁸ each represent a hydrogen atom, a C₁-C₈ alkyl group, a chlorine atom, or a bromine atom; and R⁵-R⁷ each independently represent a hydrogen atom, a C₁-C₈ alkyl group, or a C₂-C₈ alkenyl group, or R⁴ and R⁵ are taken together with the central aromatic ring to form a naphthyl group, or R⁵ and R⁶ are taken together with the central aromatic ring to form a naphthyl group including; and
(B) at least one block derived from a conjugated diene, in which the aliphatic unsaturated group content in the block (B) is reduced by hydrogenation.

10. The thermoplastic composition of Claim 1, wherein the hydrogenated block copolymer comprises a styrene-(ethylene-butylene)-styrene triblock copolymer.

11. The thermoplastic composition of Claim 1, comprising 1 to 20 weight percent of the hydrogenated block copolymer, based on the total weight of the composition.

12. The thermoplastic composition of Claim 1, wherein the unhydrogenated block copolymer comprises a styrene-butadiene diblock copolymer, a styrene-butadiene-styrene triblock copolymer, or a styrene-butadiene radial teleblock copolymer.

13. The thermoplastic composition of Claim 1, comprising 1 to 20 weight percent of the unhydrogenated block copolymer.

14. The thermoplastic composition of Claim 1, further comprising a polypropylene-polystyrene graft copolymer having a propylene polymer backbone and one or more styrene polymer grafts.

15. The thermoplastic composition of Claim 14, comprising 0.5 to 15 weight percent of the polypropylene-polystyrene graft copolymer, based on the total weight of the composition.

16. The thermoplastic composition of Claim 1, further comprising an ethylene/alpha-olefin elastomeric copolymer.

17. The thermoplastic composition of Claim 16, wherein the ethylene/alpha-olefin elastomeric copolymer comprises an ethylene-butylene rubber, an ethylene-propylene rubber, or a mixture thereof.

18. The thermoplastic composition of Claim 16, comprising 1 to 20 weight percent of the ethylene/alpha-olefin elastomeric copolymer.

19. The thermoplastic composition of Claim 1, wherein the composition is substantially free of reinforcing fillers.

20. The thermoplastic composition of Claim 1, wherein the composition after molding has less than 10% batch-to-batch variability in Izod Notched Impact Strength at 23°C measured according to ASTM D256.

21. The composition of Claim 1, wherein the composition after molding has a flexural modulus measured at 23°C according to ASTM D790 of at least 1,034,212 kPa (150,000 pounds per square inch) and an Izod Notched Impact strength measured at 23°C according to ASTM D256 of at least 214 J/m (4 foot-pounds per inch).

22. An article comprising the composition of any of the preceding Claims.

23. The article of Claim 22, wherein the article is formed using at least one method selected from the group consisting of injection molding, blow molding, extrusion, sheet extrusion, film extrusion, profile extrusion, pultrusion, compression molding, thermoforming, pressure forming, hydroforming, vacuum forming, and foam molding.

## Patentansprüche

1. Thermoplastische Zusammensetzung, umfassend:
einen Poly(arylenether);
ein poly(alkenylaromatisches) Harz in einer Menge von mindestens 30 Gewichtsprozent der Gesamtmenge des Poly(arylenethers) und des poly(alkenylaromatischen) Harzes;
ein Polyolefin;
ein hydriertes Blockcopolymer einer alkenylaromatischen Verbindung und eines konjugierten Diens, wobei das hydrierte Blockcopolymer einen Alkenylaromatgehalt von 40 bis 90 Gewichtsprozent aufweist; und
ein unhydriertes Blockcopolymer einer alkenylaromatischen Verbindung und eines konjugierten Diens.

2. Thermoplastische Zusammensetzung von Anspruch 1, umfassend 10 bis 59 Gewichtsprozent Poly(arylenether) auf der Basis des Gesamtgewichts der Zusammensetzung.

3. Thermoplastische Zusammensetzung von Anspruch 1, wobei das poly(alkenylaromatische) Harz mindestens ein poly(alkenylaromatisches) Harz umfasst, das ausgewählt ist aus der Gruppe, bestehend aus ataktischem Homopolystyrol, syndiotaktischem Homopolystyrol, kautschukmodifiziertem Polystyrol und Gemischen, umfassend mindestens eines der vorstehenden poly(alkenylaromatischen) Harze.

4. Thermoplastische Zusammensetzung von Anspruch 1, umfassend 4 bis 46 Gewichtsprozent poly(alkenylaromatisches) Harz auf der Basis des Gesamtgewichts der Zusammensetzung.

5. Thermoplastische Zusammensetzung von Anspruch 1, wobei das Polyolefin ein Homopolymer oder Copolymer mit mindestens 80 Gewichtsprozent Einheiten umfasst, die von der Polymerisation von Ethylen, Propylen, Butylen oder einem Gemisch davon abgeleitet sind.

6. Thermoplastische Zusammensetuzung von Anspruch 1, wobei es sich bei dem Polyolefin um ein Propylenpolymer handelt; und wobei es sich bei dem Propylenpolymer um ein Homopolymer von Polypropylen oder ein statistisches Pfropf- oder Blockcopolymer von Propylen und mindestens einem Olefin, ausgewählt aus Ethylen und C₄-C₁₀-alpha-Olefinen, handelt, mit der Maßgabe, dass das Copolymer mindestens 80 Gewichtsprozent Wiederholungseinheiten umfasst, die von Propylen abgeleitet sind.

7. Thermoplastische Zusammensetzung von Anspruch 1, wobei das Polyolefin ein Homopolypropylen umfasst.

8. Thermoplastische Zusammensetzung von Anspruch 1, umfassend 10 bis 70 Gewichtsprozent des Polyolefins auf der Basis des Gesamtgewichts der Zusammensetzung.

9. Thermoplastische Zusammensetzung von Anspruch 1, wobei das hydrierte Blockcopolymer umfasst:
(A) mindestens einen Block, abgeleitet von einer alkenylaromatischen Verbindung der Formel 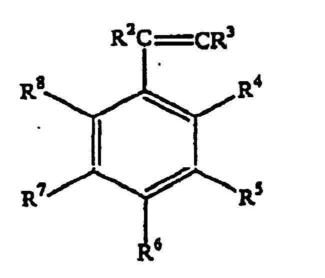 wobei R² und R³ jeweils ein Wasserstoffatom, eine C₁-C₈-Alkylgruppe oder eine C₂-C₈-Alkenylgruppe darstellen; R⁴ und R⁸ jeweils ein Wasserstoffatom, eine C₁-C₈-Alkylgruppe, ein Chloratom oder ein Bromatom darstellen; und R⁵-R⁷ jeweils unabhängig ein Wasserstoffatom, eine C₁-C₈-Alkylgruppe oder eine C₂-C₈-Alkenylgruppe darstellen oder R⁴ und R⁵ zusammen mit dem zentralen aromatischen Ring eine Naphthylgruppe bilden oder R⁵ und R⁶ zusammen mit dem zentralen aromatischen Ring eine Naphthylgruppe bilden; und
(B) mindestens einen Block, abgeleitet von einem konjugierten Dien, wobei der Gehalt an aliphatischen ungesättigten Gruppen im Block (B) durch Hydrierung reduziert ist.

10. Thermoplastische Zusammensezung von Anspruch 1, wobei das hydrierte Blockcopolymer ein Styrol-(Ethylen-Butylen)-Styrol-Triblockcopolymer umfasst.

11. Thermoplastische Zusammensetzung von Anspruch 1, umfassend 1 bis 20 Gewichtsprozent des hydrierten Blockcopolymers auf der Basis des Gesamtgewichts der Zusammensetzung.

12. Thermoplastische Zusammensetzung von Anspruch 1, wobei das unhydrierte Blockcopolymer ein Styrol-Butadien-Diblockcopolymer, ein Styrol-Butadien-Styrol-Triblockcopolymer oder ein Styrol-Butadien-Radialteleblockcopolymer umfasst.

13. Thermoplastische Zusammensetzung von Anspruch 1, umfassend 1 bis 20 Gewichtsprozent des unhydrierten Blockcopolymers.

14. Thermoplastische Zusammensetzung von Anspruch 1, ferner umfassend ein Polypropylen-Polystyrol-Pfropfcopolymer mit einem Propylenpolymergerüst und einem oder mehreren Styrolpolymerpfropfungen.

15. Thermoplastische Zusammensetzung von Anspruch 14, umfassend 0,5 bis 15 Gewichtsprozent des Polypropylen-Polystyrolpfropfcopolymers auf der Basis des Gesamtgewichts der Zusammensetzung.

16. Thermoplastische Zusammensetzung von Anspruch 1, ferner umfassend ein Ethylen/alpha-Olefin-elastomeres Copolymer.

17. Thermoplastische Zusammensetzung von Anspruch 16, wobei das Ethylen/alpha-Olefin-elastomere Copolymer einen Ethylen-Butylen-Kautschuk, einen Ethylen-Propylen-Kautschuk oder ein gemisch davon umfasst.

18. Thermoplastische Zusammensetzung von Anspruch 16, umfassend 1 bis 20 Gewichtsprozent des Ethylen(alpha-Olefin-elastomeren Copolymers.

19. Thermoplastische Zusammensetzung von Anspruch 1, wobei die Zusammensetzung im Wesentlichen frei von verstärkenden Füllstoffen ist.

20. Thermoplastische Zusammensetzung von Anspruch 1, wobei die Zusammensetzung nach dem Formen eine Variierbarkeit von Charge zu Charge in Bezug auf die gemäß ASTM D 256 gemessene Izod-Kerbschlagzähigkeit bei 23°C von weniger als 10% aufweist.

21. Zusammensetzung von Anspruch 1, wobei die Zusammensetzung nach dem Formen einen bei 23°C gemäß ASTM D790 gemessenen Biegemodul von mindestens 1.034.212 kPa (150.000 Pfund pro Quadratzoll) und eine bei 23°C gemäß ASTM D256 gemessene Kerbschlagzähigkeit von mindestens 214 J/m (4 Fuß-Pfund pro Zoll) aufweist.

22. Gegenstand, umfassend die Zusammensetzung von einem der vorangehenden Ansprüche.

23. Gegenstand von Anspruch 22, wobei der Gegenstand unter Verwendung mindestens eines Verfahrens geformt ist, das ausgewählt ist aus der Gruppe, bestehend aus Spritzguss, Blasformen, Extrusion, Lagenextrusion, Filmextrusion, Profilextrusion, Pultrusion, Pressformen, Warmformen, Druckformen, Hydroformen, Vakuumformen und Schaumformen.

## Revendications

1. Composition thermoplastique, comprenant :
un poly(éther d'arylène) ;
une résine poly(alcényl-aromatique) en une quantité d'au moins 30 % en poids du total du poly(éther d'arylène) et de la résine poly(alcényl-aromatique) ;
une polyoléfine ;
un copolymère à blocs hydrogéné d'un composé alcényl-aromatique et d'un diène conjugué, dans lequel le copolymère à blocs hydrogéné possède une teneur en alcényl-aromatique de 40 à 90 % en poids ; et
un copolymère à blocs non hydrogéné d'un composé alcényl-aromatique et d'un diène conjugué.

2. La composition thermoplastique de la revendication 1, comprenant 10 à 59 % en poids de poly(éther d'arylène) par rapport au poids total de la composition.

3. La composition thermoplastique de la revendication 1, dans laquelle la résine poly(alcényl-aromatique) comprend au moins une résine poly(alcényl-aromatique) choisie dans le groupe formé par : homopolystyrène atactique, homopolystyrène syndiotactique, polystyrène modifié caoutchouc, et mélange comprenant au moins l'une des résines poly(alcényl-aromatiques) précédentes.

4. La composition thermoplastique de la revendication 1, comprenant 4 à 46 % en poids de résine poly(alcényl-aromatique), par rapport au poids total de la composition.

5. La composition thermoplastique de la revendication 1, dans laquelle la polyoléfine comprend un homopolymère ou copolymère ayant au moins 80 % en poids d'unités dérivées de la polymérisation de l'éthylène, du propylène, du butylène ou d'un mélange de ceux-ci.

6. La composition thermoplastique de la revendication 1, dans laquelle la polyoléfine est un polymère de propylène ; et dans laquelle le polymère de propylène est un homopolymère de polypropylène, ou un copolymère statistique, greffé ou à blocs de propylène et d'au moins une oléfine choisie parmi l'éthylène et les alpha-oléfines en C₄-C₁₀, sous la réserve que le copolymère comprenne au moins 80 % en poids d'unités répétitives dérivées du propylène.

7. La composition thermoplastique de la revendication 1, dans laquelle la polyoléfine comprend un homopolypropylène.

8. La composition thermoplastique de la revendication 1, comprenant 10 à 70 % en poids de la polyoléfine, par rapport au poids total de la composition.

9. La composition thermoplastique de la revendication 1, dans laquelle le copolymère à blocs hydrogéné comprend :
(A) au moins un bloc dérivé d'un composé alcényl-aromatique de formule 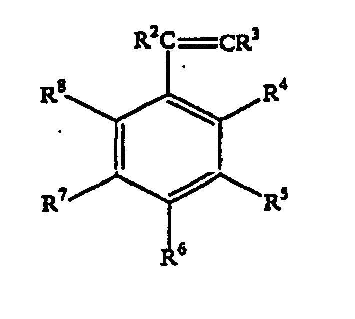 dans laquelle R² et R³ représentent chacun un atome d'hydrogène, un groupe alkyle en C₁-C₈ ou un groupe alcényle en C₂-C₈ ; R⁴ et R⁸ représentent chacun un atome d'hydrogène, un groupe alkyle en C₁-C₈, un atome de chlore ou un atome de brome ; et R⁵-R⁷ représentent chacun indépendamment un atome d'hydrogène, un groupe alkyle en C₁-C₃ ou un groupe alcényle en C₂-C₃, ou bien R⁴ et R⁵ sont pris ensemble avec le cycle aromatique central pour former un groupe naphtyle, ou bien R⁵ et R⁶ sont considérés ensemble avec le cycle aromatique central pour former un groupe naphtyle inclus ; et
(B) au moins un bloc dérivé d'un diène conjugué, dans lequel la teneur en groupe non saturé aliphatique du bloc B est réduite par hydrogénation.

10. La composition thermoplastique de la revendication 1, dans laquelle le copolymère à blocs hydrogéné comprend un copolymère tribloc styrène-(éthylène-butylène)-styrène.

11. La composition thermoplastique de la revendication 1, comprenant 1 à 20 % en poids du copolymère à blocs hydrogéné, par rapport au poids total de la composition.

12. La composition thermoplastique de la revendication 1, dans laquelle le copolymère à blocs non hydrogéné comprend un copolymère bibloc styrène-butadiène, un copolymère tribloc styrène-butadiène-styrène, ou un copolymère télébloc radial styrène-butadiène.

13. La composition thermoplastique de la revendication 1, comprenant 1 à 20 % en poids du copolymère à blocs non hydrogéné.

14. La composition thermoplastique de la revendication 1, comprenant en outre un copolymère greffé polypropylène-polystyrène avec un squelette de polymère de propylène et une ou plusieurs greffes de polymère de styrène.

15. La composition thermoplastique de la revendication 14, comprenant 0,5 à 15 % en poids du copolymère greffé polypropylène-polystyrène, par rapport au poids total de la composition.

16. La composition thermoplastique de la revendication 1, comprenant en outre un copolymère élastomère éthylène/alpha-oléfine.

17. La composition thermoplastique de la revendication 16, dans laquelle le copolymère élastomère éthylène/alpha-oléfine comprend un caoutchouc éthylène-butylène, un caoutchouc éthylène-propylène ou un mélange de ceux-ci.

18. La composition thermoplastique de la revendication 16, comprenant 1 à 20 % en poids du copolymère élastomère éthylène/alpha-oléfine.

19. La composition thermoplastique de la revendication 1, dans laquelle la composition est substantiellement dépourvue de charges renforçatrices.

20. La composition thermoplastique de la revendication 1, dans laquelle la composition après moulage présente une variabilité inférieure à 10 % d'un lot à l'autre de la résistance à l'impact Izod sur entaille à 23°C mesurée selon ASTM D256.

21. La composition de la revendication 1, dans laquelle la composition après moulage présente un module en flexion mesuré à 23°C selon ASTM D790 d'au moins 1 034 212 kPa (150 000 livres par pouce carré) et une résistance à l'impact Izod sur entaille mesurée à 23°C selon ASTM D256 d'au moins 214 J/m (4 pieds-livres par pouce).

22. Un article comprenant la composition selon l'une des revendications précédentes.

23. L'article de la revendication 22, dans lequel l'article est formé en utilisant au moins un procédé choisi dans le groupe formé par : moulage par injection, moulage par soufflage, extrusion, extrusion en feuille, extrusion en film, extrusion en profilé, pultrusion, moulage avec compression, thermoformage, formage à la pression, hydroformage, formage sous vide et moulage en mousse.
